# EUROPÄISCHE PATENTSCHRIFT

(11) **EP 3 729 817 B1**
(45) Veröffentlichungstag und Bekanntmachung des Hinweises auf die Patenterteilung: **23.04.2025**
(21) Anmeldenummer: 18825684.6
(22) Anmeldetag: 19.12.2018
(51) Int. Cl.: H04N 21/43, H04N 21/44

(54) **VERFAHREN ZUM SYNCHRONISIEREN VON EINEM ZUSATZSIGNAL ZU EINEM HAUPTSIGNAL**
METHOD FOR SYNCHRONIZING AN ADDITIONAL SIGNAL TO A PRIMARY SIGNAL
PROCÉDÉ DE SYNCHRONISATION D'UN SIGNAL SUPPLÉMENTAIRE AVEC UN SIGNAL PRINCIPAL

(30) Priorität: 22.12.2017 DE 102017131266; 02.03.2018 AT 501802018
(43) Veröffentlichungstag der Anmeldung: 28.10.2020
(60) Teilanmeldung: 22216064.0
(73) Patentinhaber: NativeWaves AG, 5071 Himmelreich (AT)
(72) Erfinder: HASLAUER, Christof, 5301 Eugendorf (AT); DUMBÖCK, Oliver, 5061 Elsbethen (AT)
(74) Vertreter: HGF
(86) Internationale Anmeldenummer: PCT/EP2018/085831
(87) Internationale Veröffentlichungsnummer: WO 2019/121904

(56) Entgegenhaltungen:
- EP-A1- 1 030 278
- EP-A2- 1 729 173
- WO-A1-2011/069035
- WO-A1-2014/178796
- WO-A1-2017/181852
- WO-A2-2007/072326
- WO-A2-2012/049223
- US-A1- 2004 114 919
- US-A1- 2011 135 283
- US-A1- 2011 137 976
- US-A1- 2011 286 735
- US-A1- 2014 201 769
- US-A1- 2015 189 347
- US-A1- 2018 349 494
- ANONYMOUS: "Accurately synchronizing companion devices with TV programs", INTERNET CITATION, 10 January 2012 (2012-01-10), pages 1 - 2, XP007920064, Retrieved from the Internet <URL:http://www.civolution.com/fileadmin/bestanden/datasheets/VideoSync_-2nd_screen.pdf> [retrieved on 20120110]

## Beschreibung

Die Erfindung betrifft ein Verfahren zum Synchronisieren von einem Zusatzsignal zu einem Hauptsignal und eine Vorrichtung zum Synchronisieren von einem Zusatzsignal zu einem Hauptsignal.

Die Signale sind "kontinuierliche Signale", wobei unter kontinuierlichen Signalen Signale verstanden werden, welche durch eine Merkmalsfolge von zeitlich aufeinanderfolgenden Merkmalen beschrieben werden können. Typische kontinuierliche Signale sind Audiosignale und Videosignale, welche zur Erzeugung entsprechender Merkmale in regelmäßigen Abständen abgetastet werden können. Kontinuierliche Signale können jedoch auch Signale sein, mit welchen digital kodierter Text übertragen wird.

Die US 9,609,034 B2 offenbart ein Verfahren zum Identifizieren von Mediendaten durch Metadaten.

Die WO 2016/085414 A1 beschreibt ein Verfahren, wobei eine mobile Plattform den Sender auf einem Fernseher erkennt und in Werbepausen dazu passende Informationen empfängt. Die EP 2 507 790 B1 beschreibt ein Verfahren und ein System für kanal-invariantes robustes Audio-Hashing mit anschließendem Vergleich von zwei Audio-Hashes. Die Audiosignale werden zunächst in Fragmente mit einer typischen Länge von 2 Sekunden unterteilt. Anschließend werden diese Fragmente weiter in Frames mit einer typischen Länge von 0,36 Sekunden unterteilt. Die Frames werden fourier-transformiert und die entstehenden Daten danach normalisiert. Die Hash-Werte werden durch Quantisieren dieser Daten gewonnen.

Die WO 2012/049223 A2 beschreibt ein Verfahren, um zu einem kombinierten Video- und Audiosignal ein alternatives Audiosignal zu synchronisieren. Dafür werden zwei Möglichkeiten genannt. Zum einen wird eine Wasserzeichenmethode beschrieben, welche zu dem Video- und Audiosignal ein, dem Menschen nicht wahrnehmbares, Zusatzsignal darstellt und zum Beispiel als Modulation des primären Audiosignales dargestellt werden kann. Die andere Methode beschreibt die Fingerprint-Methode.

Das Hauptaudiosignal wird anhand der Amplitude, Frequenz, Nulldurchgangsrate, Geschwindigkeit, spektrale Ebenheit, Bandbreite und/oder Audio-Fingerprints charakterisiert und mit den entsprechenden Charakteristiken vom zweiten Signal verglichen. Wurde die Stelle im zweiten Signal erkannt, kann diese dem Hauptsignal zeitlich angepasst werden.

Die WO 2014/018652 A2 beschreibt, wie die WO 2012/049223 A2, ein Verfahren zur Synchronisierung eines alternativen Audiosignales zu einem kombinierten Video- und Audiosignal. Als Methode wird wieder ein Fingerprint-Verfahren genutzt. Die Fingerprints des Hauptaudiosignal sind hierbei in voller Länge mit dem zweiten Signal gekoppelt. Das zweite Signal und die Fingerprints des ersten Signals werden vorab auf das zu synchronisierende Gerät überspielt, sodass bei der Synchronisierung nur das erste Signal analysiert und mit den Fingerprints auf dem Gerät verglichen werden muss.

Aus der WO 03003743 A2 gehen ein Verfahren und eine Vorrichtung hervor, die Synchronisationssignale zum Synchronisieren von parallelen Medien bereitstellen. Ein Synchronisationsserver ist mit einem Kommunikationsnetzwerk gekoppelt und mit einer Übertragungsmedien-Startzeitdatenbank verbunden. Der Synchronisationsserver empfängt von einem Benutzer-Client über das Kommunikationsnetzwerk eine Synchronisationsanforderung. Der Synchronisationsserver erzeugt Synchronisationsdaten unter Verwendung der Synchronisationsanforderung und der Übertragungsmedien-Startzeitdatenbank.

In der WO 2014209179 A1 sind Verfahren und Transceiver für Netzwerk-Diversitäten in Fernkommunikation beschrieben. Das Verfahren in einem Hauptknoten umfasst zur Kommunikation mit einem Zielknoten über große Entfernungen die Schritte:
- Synchronisieren der Verwendung von mindestens einer Kommunikationsressource mit einem Hilfsknoten,
- Erzeugen eines Hauptsignals und eines Hilfssignals aus einer Informationsmenge,
- Übertragen des Hauptsignals an den Zielknoten durch die mindestens eine synchronisierte Kommunikationsressource,
- Übertragen des Hilfssignals zu dem Hilfsknoten durch die mindestens eine synchronisierte Kommunikationsressource.

In US 2014/0201769 A1 wird ein System und ein Verfahren beschrieben, bei dem an einem Fernsehgerät Zusatzinformation ausgegeben werden kann. Diese Zusatzinformation wird mit einem Hauptsignal synchronisiert, indem eine Datenbank mit sogenannten Fingerabdrücken erzeugt wird, wobei die Synchronisation des Zusatzsignales dadurch erfolgt, dass die Fingerabdrücke des Zusatzsignales mit den Fingerabdrücken des Hauptsignales in Übereinstimmung gebracht werden. Hierin ist auch offenbart, dass die Latenz beim Broadcast-Verfahren einige Sekunden beträgt, wohingegen die Latenz beim Übertragen von Daten im Internet lediglich einige ms beträgt.

Aus der US 2011/0135283 A1 geht ein Verfahren hervor, um Medieninhalte auf mehreren Geräten zu synchronisieren. Hierbei werden Fingerabdrücke aus einem ersten Medieninhalt auf einem ersten Wiedergabegerät erstellt. Diese Fingerabdrücke werden mit Fingerabdrücken aus einer Datenbank verglichen, woraus dann eine zeitliche Position bestimmt wird. Anhand dieser Synchronisationsinformation können die gleichen Medieninhalte auf anderen Geräten gleichzeitig abgespielt werden.

In der US 2015/0189347 A1 werden Verfahren, Systeme und Medien zur Präsentation von Zusatzinformationen offenbart, die den on-Demand-Medieneinheiten entsprechen. Über eine Webbrowser-Anwendung wird zunächst der abgespielte Medieninhalt identifiziert und anschließend überprüft, ob zu diesem zusätzlicher Inhalt verfügbar ist. Ist dies der Fall, wird über einen Indikator angezeigt, dass zusätzlicher Inhalt verfügbar ist. Wird dieser abgespielt, wird über Zeitinformationen, die mit den zusätzlichen Medieninformationen übertragen wurden, die Medien so synchronisiert, dass diese zeitgleich abgespielt werden.

In der WO 2007/072326 A2 ist ein Verfahren offenbart, in dem ein Inhaltsstrom und ein Skript synchronisiert werden, um einen oder mehrere sensorische Effekte in einem Multimediasystem auszugeben. Aus einem Abschnitt des Inhaltsstroms wird ein Fingerabdruck berechnet. Daraus wird ein Zeitwert ermittelt, der dem Fingerabdruck entspricht. Der Zeitwert kann in einer Fingerabdruckdatenbank gespeichert werden, auf die unter Verwendung des Fingerabdrucks zugegriffen wird und dadurch der Zeitwert abgerufen wird. Ein Skripttaktgeber ist auf den Zeitwert und damit auf den Abschnitt des Inhaltsstroms synchronisiert. Der Abschnitt des Inhaltsstroms wird synchron mit dem Skript unter Verwendung des synchronisierten Skripttaktes wiedergegeben. Das Skript wird verwendet, um einen oder mehrere sensorischen Effekte zu erzeugen. Diese Effekte können zum Beispiel TV-Umgebungslichter sein (siehe Seite 2, letzter Absatz bis Seite 3, dritter Absatz und Zusammenfassung).

Die WO 2014/178796 A1 zeigt ein Verfahren, bei welchem beispielsweise ein Fernsehsignal mittels eines Broadcast-Verfahrens übertragen wird. Zusatzsignale können zu einem Hauptsignal mittels Wasserzeichen ("water marks") und/oder Fingerabdrücke ("finger prints") synchronisiert werden. Hierin ist auch offenbart, dass die Fingerabdrücke in Echtzeit, d.h. während das Signal im Broadcast-Verfahren übertragen wird, erzeugt werden können. Mit dem Wasserzeichen können die Zusatzsignale schnell den entsprechenden Abschnitten des Hauptsignals zugeordnet werden, wobei sie mit den Fingerabdrücken dann exakt bezüglich des Hauptsignales synchronisiert werden. Die Verwendung der Fingerabdrücke wird daher immer in Verbindung mit der Verwendung von Wasserzeichen angewandt. Die Fingerabdrücke sind Abschnitte des Signals im Zeitraum.

In der D9 (WO 2017/181852 A1) ist ein Liedbestimmungsverfahren offenbart, bei dem das Lied in einem Videozwischenspiel (zum Beispiel Werbung) aus einer Sammlung erkannt wird. Der Abgleich kann hierbei über Peaks im Frequenzspektrum abgeglichen werden. Wurde das Lied erkannt, wird ein zum Lied zugehöriger Musiktext synchronisiert.

Aufgabe der vorliegenden Erfindung ist es, ein schnelles, robustes und genaues Verfahren und eine entsprechende Vorrichtung bereitzustellen, mit welchen ein Zusatzsignal synchron zu einem beliebigen, auch kontinuierlichen Hauptsignal ausgegeben werden kann.

Eine weitere Aufgabe liegt darin, ein Streaming-Verfahren mit kurzer Latenz bereitzustellen.

Eine weitere Aufgabe liegt darin, ein schnelles, robustes und genaues Verfahren bereitzustellen, mit dem die Verzögerung zwischen Aufnahme und Ausgabe eines Medienabspielgerätes gemessen und kalibriert werden kann.

Eine weitere Aufgabe liegt darin, ein Verfahren zum Synchronisieren eines Zusatzsignals zu einem Hauptsignal bereitzustellen, das den Zeitversatz zwischen diesen beiden Signalen misst und mindestens eines dieser Signale dementsprechend anpasst, dass der Zeitversatz möglichst klein ist.

Die Aufgaben werden durch die Merkmale der unabhängigen Ansprüche gelöst. Vorteilhafte Weiterbildungen und bevorzugte Ausführungsformen bilden den Gegenstand der Unteransprüche.

Nach einem ersten Aspekt der Erfindung ist ein Verfahren zum Synchronisieren von einem Zusatzsignal zu einem Hauptsignal mit folgenden Schritten vorgesehen, das mit einem Broadcasting-Verfahren an viele Abspielgeräte übermittelt wird:
- Erzeugen von DB-Merkmalsfolgen für eine Datenbank von dem Hauptsignal, während das Hauptsignal von einer Sendestation zu einem Abspielgerät übertragen wird,
- Erzeugen von Synchronisationsinformationen zu dem Hauptsignal in einem Synchronisationsserver, indem zumindest eine Signalmerkmalsfolge des Hauptsignals extrahiert und mit in der Datenbank gespeicherten DB-Merkmalsfolgen verglichen wird, wobei die Signalmerkmalsfolge als auch die DB-Merkmalsfolge Merkmale im Frequenzraum umfassen und bei einer Übereinstimmung der Signalmerkmalsfolge mit einer der DB-Merkmalsfolgen zu einem vorbestimmten Grad Synchronisationsinformationen der übereinstimmenden DB-Merkmalsfolge dem Hauptsignal an einer durch die Signalmerkmalsfolge vorgegebenen Position zugeordnet wird,
   wobei eine Tonspur des Hauptsignals abschnittsweise durch eine Fast-Fourier-Transformation in den Frequenzraum transformiert wird,
   wobei die Abschnitte, die in den Frequenzraum transformiert werden, der Tonspur nicht länger als 50 ms sind,
   wobei die Merkmale Frequenzspitzen sind, welche über einen bestimmten Schwellenwert liegen,
- Übertragen der Synchronisationsinformationen zu einem der Abspielgeräte, das anhand der Synchronisationsinformationen ein Zusatzsignal synchron zum Hauptsignal ausgibt.

Da bei diesem Verfahren eine oder mehrere Signalmerkmalsfolgen des Hauptsignals extrahiert werden und diese mit entsprechenden vorgespeicherten DB-Merkmalsfolgen einer Datenbank verglichen werden, ist es nicht notwendig, dass das Hauptsignal von Haus aus mit einer bestimmten Zeitinformation, wie zum Beispiel einem Startpunkt, versehen ist. Das Hauptsignal kann beispielsweise ein kontinuierlich übermitteltes Fernsehsignal sein, das keinen Startpunkt besitzt. Durch das Vergleichen der Merkmalsfolgen kann im Hauptsignal eine der Signalmerkmalsfolgen durch eine Übereinstimmung mit einer entsprechenden DB-Merkmalsfolge identifiziert werden. Hierdurch kann dem Hauptsignal zu einer vorgegebenen Position, welche in Beziehung zu der identifizierten Signal-Merkmalsfolge steht, Synchronisationsinformationen zugeordnet werden. Mit anderen Worten bedeutet dies, dass die Synchronisationsinformationen zu dem Ort bzw. der Position der identifizierten Signal-Merkmalsfolge im Hauptsignal bezogen sind. Diese Synchronisationsinformationen sind beispielsweise zusammen mit den DB-Merkmalsfolgen in der Datenbank gespeichert. Diese Synchronisationsinformationen können jedoch auch eine Zeit, insbesondere eine Serverzeit eines Synchronisationsservers, auf dem dieses Verfahren ausgeführt wird, umfassen, die erfasst wird, wenn beispielsweise das Zusatzsignal mit dieser Signal-Merkmalsfolge von dem Synchronisationsserver empfangen, die Signal-Merkmalsfolge extrahiert oder das Zusatzsignal mit dieser Signal-Merkmalsfolge vom Synchronisationsserver zum Abspielgerät gesendet wird. Diese Signal-Merkmalsfolge bildet somit einen bestimmten Ort im Hauptsignal, dem dann eine bestimmte Zeit, insbesondere Serverzeit zugeordnet wird. Diese bestimmte Zeit kann auch aus einer im Signal enthaltenen Zeitinformation extrahiert und der jeweiligen Signal-Merkmalsfolge zugeordnet werden.

Selbstverständlich kann dieses Verfahren auch bei einem Hauptsignal verwendet werden, das einen bestimmten Startpunkt aufweist. Hierdurch ist das erfindungsgemäße Verfahren wesentlich flexibler als herkömmliche Verfahren, wie sie beispielsweise aus der EP 1 307 833 B1 bekannt sind, welche ein Hauptsignal mit einer festen Zeitreferenz benötigen. Diese Zeitreferenz wird beim erfindungsgemäßen Verfahren beim Durchgang des Hauptsignals (englisch: on the fly) beispielsweise durch einen Synchronisationsserver geschaffen, indem durch den Vergleich mit den DB-Merkmalsfolgen zumindest eine Signal-Merkmalsfolge des Hauptsignals identifiziert wird, welcher dann entsprechende Synchronisationsinformationen zugeordnet werden können.

Weiterhin kann der Zeitpunkt der Signalmerkmalsfolge im Hauptsignal bestimmt werden, welche mit der DB-Merkmalsfolge übereinstimmt und dieser Zeitpunkt kann dieser extrahierten Signalmerkmalsfolge als Extraktionszeitpunkt zur Erzeugung der Synchronisationsinformationen zugeordnet werden.

Mit einem solchen Extraktionszeitpunkt wird eine dem Hauptsignal zugordnete Zeitinformation erzeugt, welche einen Ort bzw. Punkt im Hauptsignal mit einer Zeit verknüpft. Eine solche Zuordnung einer Zeitinformation zum Hauptsignal kann auch Sinn machen, wenn das Hauptsignal bereits eine Zeitinformation z.B. in Form von Zeitmarker aufweist. Hierdurch schafft man ggfs. eine zweite Referenz, welche mit weiterer Information verknüpft sein kann.

Weiterhin kann der DB-Merkmalsfolge eine Zeitinformation zugeordnet sein, welche einen bestimmten DB-Zeitpunkt relativ zur DB-Merkmalsfolge definiert, der zur Erzeugung der Synchronisationsinformationen verwendet wird. Diese Zeitinformation ist typischerweise zusammen mit der DB-Merkmalsfolge in der Datenbank gespeichert. Sie gibt beispielsweise einen bestimmten Zeitpunkt an, wann eine Signal-Merkmalsfolge, welche mit dieser DB-Merkmalsfolge übereinstimmt, an einer bestimmten Stelle in einem größeren Signalabschnitt, wie zum Beispiel einem Film, auftritt. Die Zusatzsignale können dann bezüglich diesem DB-Zeitpunkt am Abspielgerät synchronisiert werden.

Auch dem Zusatzsignal können Synchronisationsinformationen zugeordnet werden, indem eine Signal-Merkmalsfolge des Zusatzsignals extrahiert und mit in einer Datenbank gespeicherten DB-Merkmalsfolge verglichen wird, wobei bei einer Übereinstimmung zu einem vorbestimmten Grad der Signal-Merkmalsfolge mit einer der DB-Merkmalsfolgen Synchronisationsinformationen dem Zusatzsignal an einer durch die Signal-Merkmalsfolge vorliegenden Position zugeordnet wird.

Dem Zusatzsignal können auch manuell Synchronisationsinformationen zugeordnet werden. Beispielsweise kann ein Operator dem Zusatzsignal eine Zeitinformation zuordnen, wann es bezüglich eines Hauptsignals auszustrahlen ist.

Es kann jedoch auch ein Zusatzsignal verwendet werden, welchem bereits vorab Synchronisationsinformationen zugeordnet sind.

Die Synchronisationsinformationen können ein oder mehrere der folgenden Daten umfassen:
- Eine Zeitinformation, welche einen Zeitpunkt des Haupt- und/oder Zusatzsignals identifiziert, wobei insbesondere ein Zeitpunkt relativ zu einer detektierten Signal-Merkmalsfolge hierdurch beschrieben wird.
- Einen oder mehrere Identifikationsmarker, welche den Inhalt des Haupt- und/oder Zusatzsignals beschreiben. Diese Identifikationsmarker können beispielsweise alleine den Typ des Zusatzsignals, wie zum Beispiel Untertitel einer bestimmten Sprache, Audio-Synchronisationssignale in einer bestimmten Sprache, Erläuterung über den Typ von METAInformationen, welche mit dem Zusatzsignal übermittelt werden, beschreiben. Die Identifikationsmarken können jedoch auch das Zusatzsignal detaillierter beschreiben und Strukturen des Zusatzsignales wiedergeben. Ist das Zusatzsignal beispielsweise ein Liedtext, dann können die Identifikationsmarker die jeweiligen Strophen des Liedtextes identifizieren. Es können jedoch auch andere Strukturen, wie zum Beispiel Kapitel, Akte einer Oper, Lieder eines Konzertes, Folgen einer Fernsehserie oder dergleichen mit den Identifikationsmarkern beschrieben werden
- Einen Zeitstempel, welcher einen bestimmten Zeitpunkt im Haupt- und/oder Zusatzsignal beschreibt. Dieser Zeitpunkt ist unabhängig von einer der detektierten Signalmerkmalsfolgen und beschreibt beispielsweise einen bestimmten Zeitpunkt in einem Film bezüglich eines Referenzpunktes, welcher nicht in Bezug zu einer detektierten Signalmerkmalsfolge steht. Dieser Referenzpunkt ist in der Regel ein Startpunkt des Hauptsignals, des Zusatzsignals oder eines bestimmten Abschnittes des entsprechenden Signals.
- Einen zeitlichen Offset, der das Zeitintervall beschreibt, das zum Weiterleiten eines Haupt- und/oder Zusatzsignals von einer bestimmten Stelle eines Übertragungsweges bis zur tatsächlichen Ausgabe des Haupt- und/oder Zusatzsignals an dem Abspielgerät notwendig ist. Diese Synchronisationsinformation ist somit keine Synchronisationsinformation, welche eine Eigenschaft des Haupt- oder Zusatzsignals beschreibt, sondern eine Eigenschaft der Vorrichtung, mit welcher das Verfahren ausgeführt wird.

Die Synchronisationsinformationen können je nach Anwendungsfall sehr unterschiedlich zusammengesetzt sein.

Bei dem oben erläuterten Aspekt der Erfindung werden die Synchronisationsinformationen der übereinstimmenden DB-Merkmalsfolgen dem Hauptsignal an einer durch die Signal-merkmalsfolge vorgegebenen Position zugeordnet. Den DB-Merkmalsfolgen sind bestimmte Informationen in der Datenbank zugeordnet. Diese Informationen müssen jedoch nicht unbedingt eine Zeitinformation umfassen. Sie können z. B. Metadaten sein, die die Bedeutung (z.B. Titel eines Musikstücks, Akt einer Oper, etc.) der DB-Merkmalsfolge oder eines Abschnittes des Signals, in dem sich diese DB-Merkmalsfolge befindet, beschreibt. Die Synchronisationsinformationen können beispielsweise dann anhand einer im Hauptsignal enthaltenen Zeitinformation, welche zusammen mit der Signalmerkmalsfolge extrahiert wird oder anhand des Extraktionszeitpunktes erzeugt werden, welche beispielsweise mit diesen Metainformationen kombiniert werden und so eine Synchronisationsinformation ergibt, anhand welcher ein Zusatzsignal mit der gleichen Metainformation zugeordnet werden kann, wobei der Zeitpunkt der Zuordnung bzw. der Synchronisation anhand der extrahierten Zeitinformation bzw. anhand des Extraktionszeitpunktes abgeleitet wird.

Mit anderen Worten bedeutet dies, dass dem Hauptsignal Synchronisationsinformationen zugeordnet werden und ein zeitlicher Bezug der Synchronisationsinformationen zum Hauptsignal besteht.

Der Erfindung liegt weiterhin die Erkenntnis zugrunde, dass Mediensignale aus unterschiedlichen Signalquellen oftmals ähnliche Abschnitte von Merkmalen aufweisen. Diese Merkmalsabschnitte müssen nicht exakt gleich sein. Ist ein Hauptsignal bspw. ein hoch qualitatives Tonsignal eines Konzertes und ein Zusatzsignal ein Videosignal mit einem Tonsignal geringer Qualität, dann kann das Zusatzsignal auf Grundlage des Tonsignals mit geringer Qualität, z.B. beim Begrüßungsapplaus der Musiker, sehr exakt synchronisiert werden, da die Audiomerkmale hier sehr ähnlich sind, auch wenn sich die Qualität der beiden Tonsignale erheblich unterscheidet. Dies ist gleichermaßen mit Videosignalen möglich, welche mit professionellen Kameras aufgenommen werden und welchen die bspw. mit einem Mobiltelefon aufgenommen werden.

Die Erfinder haben erkannt, dass anhand dieser Merkmalsabschnitte eine automatische Identifizierung eines oder mehrerer bestimmter Signalmerkmalsfolgen zur Synchronisierung der unterschiedlichen Signale möglich ist.

Die Synchronisationsinformationen können an einem Synchronisationsserver erzeugt werden, welcher unabhängig von einem Abspielgerät ausgebildet ist. Diese müssen dann an das Abspielgerät übermittelt werden, auf welchem das Zusatzsignal synchron zum Hauptsignal ausgegeben wird. In diesem Fall könnte auch eine Synchronisation des Abspielgerätes und des Synchronisationsservers ausgeführt werden, beispielsweise indem ein Zeitintervall bestimmt wird, das zum Übertragen des entsprechenden Signals von einer vorbestimmten Stelle, insbesondere vom Synchronisationsserver, zum Abspielgerät benötigt wird. Der Synchronisationsserver kann jedoch auch im Abspielgerät selbst ausgebildet sein. Wird eine digitale Übertragung der Daten zwischen dem Synchronisationsserver und dem Abspielgerät verwendet, ist es in der Regel nicht möglich, dieses Zeitintervall zu bestimmen, da es variiert.

Am Abspielgerät kann das Zusatzsignal zum Hauptsignal synchronisiert werden, indem am Abspielgerät das Hauptsignal und das Zusatzsignal ausgegeben werden, welche jeweils als Synchronisationsinformationen einen oder mehrere Zeitmarker enthalten. Anhand der Zeitmarker kann das Abspielgerät das Zusatzsignal dem Hauptsignal synchron zuordnen und diese synchron ausgeben.

Weiterhin kann am Abspielgerät anhand einer am Abspielgerät mittels einer Uhr gemessenen Abspielzeit das Zusatzsignal mittels der Synchronisationsinformationen dieser Abspielzeit derart zugeordnet werden, dass das Zusatzsignal synchron zum Hauptsignal ausgegeben wird.

Im ersten Fall werden das Hauptsignal und das Zusatzsignal mit demselben Abspielgerät ausgegeben, so dass die Zeitmarker in beiden Signalen genügen, um die Signale synchron auszugeben. Will man jedoch im Hauptsignal keine Zeitmarker einfügen, da man das Hauptsignal beispielsweise ohne zeitliche Verzögerung möglichst schnell zu einem Abspielgerät übermitteln möchte, oder wird das Hauptsignal an einem anderen Abspielgerät als das Zusatzsignal ausgegeben, dann ist es zweckmäßig, dass das Zusatzsignal mittels der Synchronisationsinformationen einer am Abspielgerät mittels einer Uhr gemessenen Abspielzeit zugeordnet wird. Die Synchronisationsinformationen enthalten die entsprechenden Informationen, um das Zusatzsignal der Abspielzeit derart zuzuordnen, dass das Zusatzsignal synchron zum Hauptsignal ausgegeben wird.

Wenn das Hauptsignal und das Zusatzsignal über unterschiedliche Abspielgeräte ausgegeben werden, dann ist es zweckmäßig, eine erste Uhrzeit zu verwenden, der die Ausgabe des Hauptsignals zugeordnet ist. Mit dieser Uhrzeit werden somit die Zeitpunkte der einzelnen Merkmale bzw. Merkmalsfolgen im Hauptsignal beschrieben. Hierfür könnte man grundsätzlich die Uhr des Abspielgerätes verwenden, mit welchem das Hauptsignal ausgegeben wird. Ist jedoch ein Synchronisationsserver vorgesehen, der unabhängig von diesem Abspielgerät für das Hauptsignal ist, dann kann man auch die Uhr des Synchronisationsservers verwenden, insbesondere wenn das Hauptsignal kontinuierlich vom Synchronisationsserver zu dem Abspielgerät übermittelt wird. Dann ist lediglich den Synchronisationsinformationen ein entsprechender zeitlicher Offset hinzuzufügen, der das Zeitintervall angibt, um welches das Hauptsignal an dem Abspielgerät bezüglich des Durchganges am Synchronisationsserver verzögert ausgegeben wird. Für das Abspielgerät des Zusatzsignals wird eine Synchronisationsinformation vorgesehen, welche die Beziehung der Abspielzeit am Abspielgerät zur Serverzeit am Synchronisationsserver beschreibt. Hierdurch kann anhand der Abspielzeit ein Bezug zur Serverzeit des Synchronisationsservers hergestellt werden, da zu dieser Serverzeit auch die Ausgabe des Hauptsignales synchronisiert ist. Werden sowohl die Serverzeit als auch die Abspielzeit mit einer unabhängigen Uhrzeit bzw. Referenzzeit (z.B. NTP: network time protocol) regelmäßig synchronisiert, dann müssen die Synchronisationsinformationen keine Information über die Beziehung dieser beiden Zeiten enthalten, da beide Zeiten im Rahmen der vorliegenden Messgenauigkeiten als identisch zu beurteilen sind.

Beim Vergleich der Signalmerkmalsfolgen mit den DB-Merkmalsfolgen kann es sein, dass mehrere Signalmerkmalsfolgen mit dem vorbestimmten Grad übereinstimmen. Es können dann grundsätzlich die mehreren Signalmerkmalsfolgen zum Erzeugen von Synchronisationsinformationen verwendet werden. Zweckmäßigerweise wird jedoch die Übereinstimmung aller Signalmerkmalsfolgen, welche innerhalb eines vorbestimmten Zeitintervalls den vorbestimmten Grad an Übereinstimmung erfüllen, bewertet, und es wird die Signal-Merkmalsfolge mit der besten Bewertung ausgewählt, um dem Hauptsignal an einer durch die Signal-Merkmalsfolge vorgegebenen Position die Synchronisationsinformationen zuzuordnen. Man möchte grundsätzlich eine eindeutige Zuordnung der Synchronisationsinformationen zum Hauptsignal. Bei Verwendung von mehreren Signalmerkmalsfolgen ist dies nicht immer sichergestellt. Bei der Verwendung der am besten mit einer DB-Merkmalsfolge übereinstimmenden Signal-Merkmalsfolge erzielt man auch die beste Synchronisation.

Die vorbestimmten Regeln zum Bewerten des Grades der Übereinstimmung der Signal-Merkmalsfolge mit der DB-Merkmalsfolge umfassen eine oder mehrere der folgenden Regeln:
- Je größer die Anzahl der übereinstimmenden Merkmale einer Merkmalsfolge ist, desto besser ist die Bewertung.
- Je größer die Anzahl der übereinstimmenden Merkmale einer Merkmalsfolge im Verhältnis zu der Anzahl der in der Merkmalsfolge enthaltenen Merkmale ist, desto besser ist die Bewertung.
- Die Übereinstimmung der einzelnen Merkmale wird klassifiziert, wobei je geringer der Abstand der übereinstimmenden Merkmale ist, desto besser wird die entsprechende Übereinstimmung klassifiziert und diese Klassifizierung wird dann bei der Gesamtbewertung der Übereinstimmung einer Merkmalsfolge berücksichtigt.

Nach einem weiteren Aspekt der vorliegenden Erfindung wird ein Verfahren zum Synchronisieren von einem Zusatzsignal zu einem Hauptsignal vorgesehen, das folgende Schritte umfasst:
- Extrahieren von Signalmerkmalsfolgen aus dem Hauptsignal und Speichern der Signal-merkmalsfolgen in einer Datenbank zusammen mit Zeitinformationen,
- Synchronisieren eines Zusatzsignales unter Verwendung dieser Datenbank, wobei insbesondere aus dem Zusatzsignal extrahierte Merkmalsfolgen mit denen in der Datenbank gespeicherten Merkmalsfolgen verglichen werden und/oder Zeitinformationen aus dem Zusatzsignal mit entsprechenden Zeitinformationen der Datenbank verglichen werden.

Mit diesem Verfahren wird eine Datenbank für ein Hauptsignal erstellt, während das Hauptsignal von einer Sendestation zu einem Abspielgerät übertragen wird, wobei diese Datenbank sofort zum Synchronisieren eines Zusatzsignals zu diesem Hauptsignal zur Verfügung steht. Hiermit kann somit ein Live-Signal analysiert und synchronisiert werden. Deshalb wird eine derart erstellte Datenbank auch als Live-Datenbank bezeichnet.

Die Zeitinformationen können mittels einer an einem entsprechenden Server vorgesehenen Uhr und/oder anhand von im Hauptsignal enthaltenen Zeitinformationen erstellt bzw. extrahiert werden.

Nach einem weiteren Aspekt der vorliegenden Erfindung wird ein Verfahren zum Synchronisieren von einem Zusatzsignal zu einem Hauptsignal geschaffen, wobei zum Kalibrieren eine Übertragungsstrecke von einem Server zu einem Abspielgerät und/oder zum Kalibrieren der Latenz an einem Abspielgerät zum Ausgeben eines Mediensignals auf dem Abspielgerät ein Referenzsignal ausgegeben wird, welches gleichzeitig von einem entsprechenden Sensor aufgenommen wird, wobei das ausgegebene Referenzsignal und das vom Sensor empfangene Referenzsignal miteinander verglichen werden, um das zur Weiterleitung des Referenzsignals und/oder der tatsächlichen Ausgabe zum Abspielgerät notwendige Zeitintervall zu bestimmen und dieses Zeitintervall wird als zeitlicher Offset genutzt, um eine Ausgabezeit anhand einer mit der Uhr des Servers und/oder des Abspielgerätes in Bezug stehenden Zeitinformation zu bestimmen, mit welcher ein Signal an dem Medienabspielgerät ausgegeben wird.

Mit diesem Verfahren können Übertragungsstrecken oder Abspielgeräte selbsttätig kalibriert werden. Die Latenz kann sich bei einem Abspielgerät erheblich unterscheiden in Abhängigkeit davon, ob beispielsweise ein Audio-Signal über einen kabelgebundenen Lautsprecher, über einen mittels Bluetooth gekoppelten Lautsprecher oder über ein nachgeordnetes Audio-System ausgegeben wird. Auch kann sich das notwendige Zeitintervall zum Übertragen von Signalen erheblich vom jeweiligen Übertragungsweg unterscheiden. Mit diesem Verfahren kann vor oder auch während des Abspielens des Mediensignals der Übertragungsweg und/oder die Latenz des Ausgabegerätes einmal oder mehrmals kalibriert werden, so dass der korrekte Offset jeweils vorliegt, mit welchem die Signale ausgegeben werden.

Das Referenzsignal kann ein Audio-Signal umfassen, wobei dann der Sensor ein Mikrofon ist. Das Referenzsignal kann auch ein Video-Signal umfassen. Als Sensor wird dann eine Kamera verwendet.

Das Zeitintervall kann bestimmt werden, indem der Zeitpunkt des Absendens und der Zeitpunkt des Empfangens des Referenzsignals bestimmt werden, wobei aus der Zeitdifferenz dieser beiden Zeitpunkte das Zeitintervall abgeleitet wird. Wenn der Zeitpunkt des Absendens und der Zeitpunkt des Empfangens des Referenzsignals an der gleichen Stelle gemessen werden, dann ist das zu bestimmende Zeitintervall die halbe Zeitdifferenz zwischen diesen beiden Zeitpunkten. Wenn der Zeitpunkt des Sendens des Referenzsignals am Beginn des Übertragungsweges und der Zeitpunkt des Empfangens des Referenzsignals unmittelbar am Sensor gemessen wird, dann ist das zu bestimmende Zeitintervall diese Zeitdifferenz. Ein oder beide Zeitpunkte können durch einen Vergleich einer extrahierten Referenz-Merkmalsfolge mit einer oder mehreren vorab gespeicherten Referenz-Merkmalsfolgen ausgeführt werden. Dieses Verfahren entspricht dem oben erläuterten Verfahren zum Identifizieren der Signalmerkmalsfolgen anhand der DB-Merkmalsfolgen. Durch einen solchen Vergleich von Merkmalsfolgen kann somit ein Zeitpunkt bestimmt werden. Die Genauigkeit eines solchen Zeitpunktes ist durch die Länge des Merkmals in der Merkmalsfolge beschränkt, welches zum Bestimmen des Zeitpunktes verwendet wird. Eine typische Länge eines solchen Merkmals liegt im Bereich von ±8 ms.

Nach einem weiteren Aspekt der vorliegenden Erfindung wird ein Verfahren zum Synchronisieren von einem Zusatzsignal zu einem Hauptsignal vorgesehen, bei dem ein Zusatzsignal von einem Abspielgerät unabhängig ausgebildeten Synchronisationsserver an das Abspielgerät übermittelt wird und am Synchronisationsserver werden Synchronisationsinformationen erzeugt, welche auf eine Serverzeit des Synchronisationsservers bezogen sind, die am Synchronisationsserver mit einer dort angeordneten Uhr gemessen wird, wobei am Abspielgerät eine Abspielgeräteuhr zum Messen einer Abspielzeit vorgesehen ist, welche zumindest einmal mit der Serverzeit synchronisiert wird, und ein Zeitdrift der Abspielzeit zur Serverzeit gemessen wird und dieser Zeitdrift bei der Synchronisierung des Zusatzsignals zum Hauptsignal mit berücksichtigt wird. Das Zusatzsignal kann am Abspielgerät durch die vom Abspielgerät vorliegende Abspielzeit gesteuert ausgegeben werden.

Der Zeitdrift kann unterschiedliche Ursachen haben. Einerseits kann die Uhr des Abspielgerätes nicht immer genau gleich schnell wie die Uhr des Servers oder die Uhren unterschiedlicher Abspielgeräte unterschiedlich schnell laufen. Andererseits kann das Zusatzsignal im Vergleich zum Hauptsignal eine zeitliche Streckung oder Stauchung aufweisen, sodass ein Zusatzsignal, das zu einem bestimmten Zeitpunkt exakt mit dem Hauptsignal synchronisiert ist, mit zunehmender Abspielzeit stärker vom Hauptsignal abweicht. Eine solche zeitliche Streckung oder Stauchung entsteht bspw. bei der Umwandlung von Analog- in Digitalsignale mit einem entsprechenden Analog-Digitalwandler. Das Hauptsignal und das oder die Zusatzsignale werden meistens über unterschiedliche Strecken übertragen und deshalb an unterschiedlichen Orten mit unterschiedlichen Analog-Digitalwandlern umgesetzt. Jeder Analog-Digitalwandler weist einen Taktgeber (Uhr) auf, mit welchen dem Digitalsignal Zeitinformationen in Form von Zeitmarkern hinzugefügt werden. Der Takt unterschiedlicher Taktgeber kann geringfügig abweichen. Dies führt dazu, dass selbst wenn ein Hauptsignal und ein Zusatzsignal im analogen Zustand identisch sind, sie im digitalen Zustand etwas abweichende Zeitinformationen aufweisen. Werden sie gleichzeitig an einem Abspielgerät abgespielt, dann kann sich mit zunehmender Abspieldauer ein zeitlicher Versatz zwischen den beiden Signalen ergeben.

Der Zeitdrift aufgrund unterschiedlich schnell laufender Uhren bzw. Taktgeber auf unterschiedlichen Abspielgeräten kann durch einen regelmäßigen Abgleich mit einer Referenzuhr (z. B. Atomuhr bzw. TMP) beseitigt werden. In Abspielgeräten hat oft die Ausgabeeinheit ein eigenes Taktsignal und das Abspielgerät eine Steuereinrichtung mit einer eigenen Uhr. In einem solchen Fall ist es zweckmäßig, wenn das Taktsignal der Abspieleinheit regelmäßig mit der Uhr der Steuereinrichtung des Abspielgerätes synchronisiert wird und die Uhr der Steuereinrichtung des Abspielgerätes in regelmäßigen Abständen mit der Referenzuhr synchronisiert wird.

Der Zeitdrift aufgrund der Stauchung oder Streckung der Signale kann gemessen werden. Hierbei ist es möglich, die Stauchung oder Streckung mit der Extraktion von Merkmalsfolgen zu bestimmen. Ist der Zeitdrift einmal bestimmt, dann kann das Zusatzsignal auf Dauer synchron zum Hauptsignal abgespielt werden, ohne dass in regelmäßigen Zeitabständen eine neue Synchronisierung zwischen Zusatzsignal und Hauptsignal erfolgen muss.

Ist der Teil des Signales des Hauptsignales verfügbar, zu welchem das Zusatzsignal synchronisiert wird, dann kann auch wiederholt eine Synchronisierung der beiden Signale zueinander ausgeführt werden, ohne dass ein Zeitdrift hierzu berechnet werden muss. Es kann z. B. zweckmäßig sein, das Hauptsignal und das Zusatzsignal durch einen gemeinsamen Synchronisationsserver zu führen, bevor sie am Abspielgerät ausgegeben werden, so dass am Synchronisationsserver das vollständige Hauptsignal und Zusatzsignal vorhanden ist und jederzeit eine neue Synchronisation des Zusatzsignals zum Hauptsignal erfolgen kann. Dann kann am Abspielgerät das Hauptsignal auch ohne den Anteil ausgegeben werden, der für die Synchronisation beider Signale notwendig ist und dennoch eine regelmäßige Neusynchronisierung zwischen beiden Signalen erfolgen.

Der Zeitdrift kann durch mehrmaliges Vergleichen mit einer Referenzzeit erfolgen, um jeweils eine Zeitdifferenz zu berechnen, wobei anhand der Abweichungen der Zeitdifferenz der Zeitdrift bestimmt wird. Je größer die Abstände zwischen dem ersten und letzten Vergleich sind, desto präziser kann der Zeitdrift bestimmt werden.

Nach einem weiteren Aspekt der vorliegenden Erfindung wird ein Verfahren zum Synchronisieren von einem Zusatzsignal zu einem Hauptsignal geschaffen, wobei in einem ersten Schritt die Zeitstempel der zu Verfügung stehenden Zusatzsignale zu einem Abspielgerät übertragen werden. Dadurch lässt sich die zur Verfügung stehende Bufferzeit ausrechnen. Die Bufferzeit beschreibt dabei die Zeit, die dem Zusatzsignal noch zur Verfügung steht, bevor es abgespielt werden muss, um synchron mit dem Hauptsignal zu sein. Zugleich kann in dieser ersten Übertragung die zur Verfügung stehende Bandbreite ermittelt werden. In dem zweiten Schritt wird die Bufferzeit dafür genutzt, um das Zusatzsignal zu codieren, vom Zusatzsignalserver zum Abspielgerät zu übertragen und das Zusatzsignal dann wieder zu decodieren. Die Qualität des Zusatzsignals hängt dabei von der zur Verfügung stehenden Bufferzeit und der zur Verfügung stehenden Bitrate ab. Bei gleicher Bufferzeit kann eine hohe Signalqualität dadurch erzeugt werden, dass entweder die Codierung/Dekodierungszeit möglichst kurz gewählt wird, wodurch aber hohe Datenmengen entstehen, die entsprechend lange Übertragungsdauern benötigen, oder eine hohe Codierung/Dekodierungszeit, wodurch die Bitrate verringert wird und die Übertragung beschleunigt wird. Bei sich verändernden Bufferzeiten, Hardware-Voraussetzungen, und zur Verfügung stehenden Bandbreiten muss die Codierung/Dekodierungszeit neu bestimmt werden.

In der Praxis kann dieses Verfahren derart ausgeführt werden, dass an dem oder den Servern die Signale (Hauptsignal und/oder Zusatzsignal) unterschiedlich mit bspw. unterschiedlichen Codecs codiert werden, so dass die Signale in unterschiedlichen Qualitäten vorliegen. Am Abspielgerät wird dann entschieden, welches Signal verwendet und vom Server abgerufen wird.

Des Weiteren wird das Zusatzsignal von dem Zusatzsignalserver zu dem Abspielgerät in Chunks mit zeitlichen Längen von 10 Frames, das in etwa 400 ms entspricht, insbesondere maximal 5 Frames, das in etwa 200 ms entspricht, und vorzugsweise maximal 1 Frame, das in etwa 40 ms entspricht, übertragen und am Abspielgerät das Zusatzsignal mit einem lokalen Web-Server empfangen. Durch das Vorsehen des lokalen Web-Servers mit einer Direktverbindung über ein Websocket kann das Zusatzsignal im Wesentlichen verzögerungsfrei empfangen werden. Eine Direktverbindung ist eine Verbindung, die nach einem Übertragungsvorgang aufrecht erhalten bleibt. Der lokale Web-Server ist vorzugsweise kompatibel zu dem vom Abspielgerät benutzten Übertragungsprotokoll (in der Regel: http), so dass das Abspielgerät selbst nicht verändert werden muss, bis auf das, dass der lokale Web-Server hinzuzufügen ist.

Dies erlaubt auch die Verwendung sehr kurzer Chunks. Bei den herkömmlichen Übertragungsverfahren verursachen derart kurze Chunks eine erhebliche Verzögerung beim wiederholten Aufbau der Datenverbindung, da durch das sequentielle Polling-Verhalten und den einzelnen File-Abfragen, welche jeweils einen Overhead verursachen, eine erhebliche Verzögerung entstehen würde. Grundsätzlich bestünde die Möglichkeit, eine Direktverbindung herzustellen, welche die Übertragung der Chunks fast verzögerungsfrei erlaubt. Jedoch hat diese den Nachteil, dass sie nur zwischen zwei bestimmten Partnern erstellt werden kann und kein Streaming zu mehreren Empfängern gleichzeitig ermöglicht.

Anstelle einer Direktverbindung kann der lokale Web-Server so ausgebildet sein, dass er mehrere Chunks gleichzeitig oder in kurzer Folge angefordert ohne auf den Empfang der vorher angeforderten Chunks zu warten. Bei herkömmlichen Verfahren werden die Chunks einzeln abgefragt und ein weiterer Chunk wird erst angefordert, wenn der vorher angeforderte Chunk bereits empfangen ist. Hierdurch können auch sehr kleine Chunks in schneller Folge übertragen werden. Hierzu können beispielsweise herkömmliche Streaming-Techniken, wie HLS oder Dash verwendet werden.

Hierdurch kann die notwendige Übertragungszeit gering gehalten werden und daher mehr Zeit für das Encoding zur Verfügung stehen. Dies kann dann mit einer hohen Datenrate durchgeführt werden, was die Qualität des Signals erhöht.

Mit diesem Übertragungsverfahren kann das Zusatzsignal in der Regel innerhalb von zwei bis drei Sekunden beim Empfänger ankommen.

Die oben erläuterten Aspekte können einzeln oder in beliebigen Kombinationen realisiert werden.

Im Rahmen der Erfindung kann ein Zusatzsignal zu einem Hauptsignal synchronisiert werden. Es ist jedoch auch möglich, dass mehrere Zusatzsignale zu einem Hauptsignal synchronisiert werden.

Die Erfindung wird nachfolgend beispielhaft näher anhand der Zeichnungen erläutert. Die Zeichnungen zeigen in:
- Figur 1: ein System zum synchronen Wiedergeben mehrerer Kamerasignale zu einem Hauptsignal,
- Figur 2: ein System zum Einspielen von externen Zusatzinformationen zu einer Live-Übertragung,
- Figur 3: ein System zum Einspielen von externen Zusatzinformationen zu einer Fernseh-Übertragung,
- Figur 4: ein System zum Einspielen von externen Zusatzinformationen zu einer Fernseh-Übertragung mit lokalem Server.

Ein erstes Ausführungsbeispiel betrifft ein System zum Übertragen einer Live-Veranstaltung auf einer Bühne 1 mit mehreren Kameras 2, einem Sendestudio 3, in dem die Kamerasignale der einzelnen Kameras 2 zusammenlaufen, um von der Regie in ein Hauptsignal umgesetzt zu werden. Das Sendestudio 3 ist mit einem Synchronisationsserver 5 verbunden, an welchen das Hauptsignal 4 übermittelt wird.

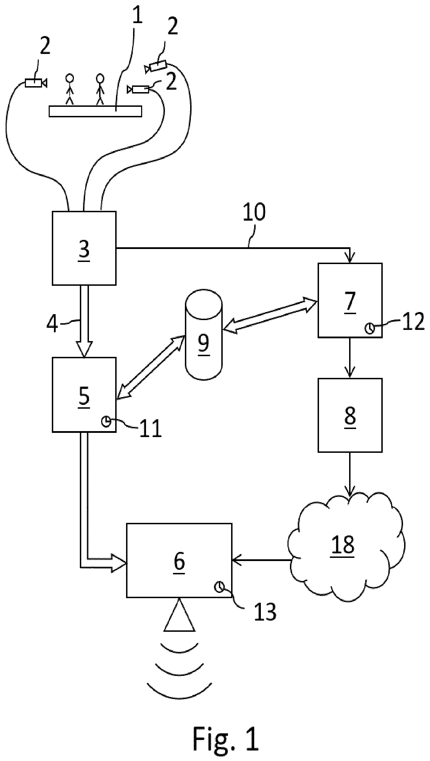

Der Synchronisationsserver 5 leitet das Hauptsignal 4 als Datenstream an ein oder mehrere Abspielgeräte 6. In Figur 1 ist lediglich ein einziges Abspielgerät dargestellt. In der Realität wird das Hauptsignal 4 z.B. in einem Broadcasting-Verfahren an viele Abspielgeräte übermittelt.

Vom Sendestudio werden die Signale der einzelnen Kameras als Zusatzsignale zu einem Zusatzsignalsynchronisationsserver 7 geleitet. Der Zusatzsignalsynchronisationsserver 7 ist mit einem Web-Server 8 verbunden, von dem nach einem Internetprotokoll die einzelnen Zusatzsignale aufgerufen und den jeweiligen Abspielgeräten 6 über das Internet 18 zugeführt werden können. Zwischen den Abspielgeräten und dem Web-Server 8 besteht eine bidirektionale Datenverbindung, so dass an den Abspielgeräten eine individuelle Auswahl über die abzurufenden Zusatzsignale erfolgen kann.

Im Sendestudio wird das Hauptsignal vorverarbeitet und optimiert. Die einzelnen Zusatzsignale werden mit oder ohne weitere Vorverarbeitung ausgegeben.

Die beiden Synchronisationsserver 5, 7 sind jeweils mit einem Datenbankserver 9 verbunden auf dem eine Datenbank vorgehalten ist, in welcher bestimmte Merkmalsfolgen mit den Merkmalsfolgen zugeordneten Synchronisationsinformationen gespeichert sind. Im vorliegenden Ausführungsbeispiel ist lediglich eine einzige Datenbank vorgesehen, auf welche beide Synchronisationsserver 5, 7 zugreifen. Es kann jedoch auch zweckmäßig sein, jeweils eine Kopie der Datenbank in unmittelbarer Nähe des jeweiligen Synchronisationsservers 5, 7 vorzusehen, so dass ein schneller Zugriff möglich ist oder auch zwei Datenbanken mit sich etwas unterscheidenden Dateninhalten.

Mit dieser Vorrichtung soll das Hauptsignal 4 am Abspielgerät 6 ausgegeben werden können und der Bediener des Abspielgerätes soll jedoch auch die Möglichkeit haben, zumindest eines der Zusatzsignale synchron am Abspielgerät 6 auszugeben.

Sowohl das Hauptsignal 4 als auch die Zusatzsignale weisen jeweils eine Video-Spur und eine Ton-Spur auf. Die Ton-Spuren der Zusatzsignale werden mittels jeweils einem, an der jeweiligen Kamera angeordneten Mikrofon aufgenommen. Das Ton-Signal des Hauptsignals wird mittels einer an der Bühne 1 installierten Mikrofonanlage aufgenommen und ist dementsprechend qualitativ wesentlich besser.

Nachfolgend wird erläutert, wie das Hauptsignal und die Zusatzsignale verarbeitet werden, um vom Abspielgerät einfach, präzise und zuverlässig synchronisiert werden zu können.

Im Synchronisationsserver 5 werden von der Ton-Spur aufeinanderfolgend Abschnitte vorbestimmter Länge ausgelesen und hieraus bestimmte Merkmale extrahiert. Hierzu werden diese Abschnitte mittels einer Fast-Fourier-Transformation in den Frequenzraum bzw. Fourier-Raum transformiert. Im vorliegenden Ausführungsbeispiel ist die Länge der einzelnen Abschnitte 16 ms. Sie sollen erfindungsgemäß jedenfalls nicht länger als 50 ms und insbesondere nicht länger als 32 ms sein, da kurze Abschnitte eine dementsprechende präzise Synchronisierung erlauben. Je kürzer die Abschnitte bzw. Zeitfenster sind, desto stärker werden tiefe Frequenzen nicht mehr berücksichtigt. Es hat sich jedoch überraschenderweise gezeigt, dass bei Zeitfenstern bis zu einer maximalen Länge von 8-10 ms ausreichend viele hochfrequente Signale vorhanden sind, um die Synchronisation durchzuführen.

Die ausgelesenen und transformierten Zeitfenster sind vorzugsweise zueinander überlappt. Bei einer Überlappung von z.B. 50% kann bei einer Zeitfensterlänge von 32 ms bzw. von 16 ms eine Auflösung von 16 ms bzw. von 8 ms erzielt werden.

Im Frequenzraum werden als Merkmale alle Frequenzspitzen betrachtet, welche über einem bestimmten Schwellenwert liegen. Das heißt, dass die Merkmale Intensitätswerte bestimmter Frequenzen sind, die über dem vorbestimmten Schwellenwert liegen.

In den einzelnen Zeitfenstern werden diese Merkmale erfasst und bilden eine Merkmalsfolge. Im vorliegenden Ausführungsbeispiel ist die Folge keine zeitliche Folge, sondern eine Auflistung von Merkmalen in der Reihenfolge ihrer Frequenz.

Die aus der Ton-Spur abgeleiteten Merkmalsfolgen werden im Folgenden als Signalmerkmalsfolgen bezeichnet. Diese Signalmerkmalsfolgen werden mit DB-Merkmalsfolgen verglichen, welche in der Datenbank gespeichert sind.

Die Datenbank 9 umfasst eine Vielzahl solcher DB-Merkmalsfolgen, welche vorab erstellt worden sind.

Wird auf der Bühne 1 ein Popkonzert veranstaltet, dann wird eine Datenbank 9 verwendet, in welcher alle Lieder der entsprechenden Musik-Band in DB-Merkmalsfolgen umgesetzt sind und möglichst auch Lieder von anderen Interpreten, welche jedoch oftmals live gespielt werden.

Die Merkmalsfolgen sind derart charakteristisch, auch wenn die Signale, aus welchen die DB-Merkmalsfolgen erzeugt worden sind, und die Live-Signale nicht identisch sind, dass sie trotzdem eine Ähnlichkeit besitzen, um einander zugeordnet werden zu können.

Wird beim Vergleichen der Signalmerkmalsfolgen mit den DB-Merkmalsfolgen eine Übereinstimmung zu einem vorbestimmten Grad festgestellt, dann wird dies als Zuordnung bewertet.

Beim Extrahieren der jeweiligen Signal-Merkmalsfolge wird mittels der Synchronisationsserveruhr 11 der Extraktionszeitpunkt erfasst und der jeweiligen Merkmalsfolge zugeordnet.

Dieser Extraktionszeitpunkt dient zur Beschreibung des Zeitpunktes einer bestimmten Merkmalsfolge im entsprechenden Signal. Somit kann durch die Extraktionszeitpunkte die relative zeitliche Zuordnung mehrerer Signal-Merkmalsfolgen innerhalb eines Signals eindeutig beschrieben werden. Es kann jedoch sein, dass der Prozess des Extrahierens selbst zeitlichen Schwankungen unterliegt. In diesem Fall sind die Extraktionszeitpunkte mit einem durch die zeitlichen Schwankungen verursachten Fehler behaftet. Deshalb kann es zweckmäßig sein, anstelle der mit der Synchronisationsserveruhr 11 gemessenen Uhrzeit eine im Hauptsignal enthaltene Zeitinformation zu verwenden, welche den Zeitpunkt eines bestimmten Punktes im Hauptsignal beschreibt. Eine solche Zeitinformation ist im Hauptsignal immanent enthalten und sie wird im Folgenden als Signalzeitinformation bezeichnet. Ist das Hauptsignal bspw. ein Videosignal, dann weist es eine bestimmte Bildfrequenz auf, mit welcher einzelne Bilder (= frames) aufgenommen und wiedergegeben werden. Werden die Bilder aufeinanderfolgend gezählt, dann ist das zeitliche Intervall zwischen zwei bestimmten Bildern dieses Signals die Anzahl der Bilder in dem Signal zwischen diesen Bildern multipliziert mit dem Kehrwert der Bildfrequenz. Die Nummer eines Bildes eines Videosignals stellt somit eine solche Signalzeitinformation dar. In der Regel ist eine solche Signalzeitinformation im Hauptsignal explizit kodiert. Sie kann jedoch auch implizit enthalten sein, indem bspw. die Anzahl der Bilder eines Videosignals gezählt werden.

Bei der Extraktion kann somit die Merkmalsfolge zusammen mit der Signalzeitinformation, die den Zeitpunkt dieser Merkmalsfolge im Hauptsignal angibt, extrahiert werden. Hierdurch wird ein Extraktionszeitpunkt erhalten, der unabhängig vom zeitlichen Ablauf des Prozesses des Extrahierens ist.

Der Signalzeitinformation kann bspw. mittels der Synchronisationsserveruhr 11 eine absolute Zeit zugeordnet werden. Diese Zuordnung erfolgt einmal und wird dann aufrechterhalten.

Den identifizierten Signalmerkmalsfolgen werden zusammen mit der entsprechenden DB-Merkmalsfolge in der Datenbank gespeicherten Synchronisationsinformationen zugeordnet. Im vorliegenden Ausführungsbeispiel enthalten die Synchronisationsinformationen Identifikationsmarker, welche das jeweilige Lied beschreiben und die Stelle im Lied definieren. Weiterhin enthalten die Synchronisationsinformationen die Extraktionszeit der entsprechenden Signalmerkmalsfolgen.

Am Zusatzsignalsynchronisationsserver 7 wird das gleiche Verfahren mit den jeweiligen Zusatzsignalen 10 ausgeführt, wobei auch hier aus der Ton-Spur die Signalmerkmalsfolgen extrahiert und mit den DB-Merkmalsfolgen der Datenbank verglichen werden. Die Extraktionszeitpunkte können mit der Zusatzsignal-Synchronisationsserveruhr 12 erfasst oder aus der entsprechenden Signalzeitinformation extrahiert werden und die Extraktionszeitpunkte werden zusammen mit den aus der Datenbank abgeleiteten Synchronisationsinformationen mit einer Zuordnung zu den jeweiligen Zusatzsignalen an das Abspielgerät übermittelt.

Hierdurch sind sowohl dem Hauptsignal als auch dem Zusatzsignal Zeitinformationen zugeordnet, die den jeweiligen Zeitpunkt der extrahierten Merkmalsfolgen im jeweiligen Signal beschreiben. Diese Zeitinformationen können bereits vorab durch Vergleich der extrahierten Merkmalsfolgen mit den in der Datenbank 9 gespeicherten DB-Merkmalsfolgen synchronisiert werden, indem bei einer Übereinstimmung zu einem vorbestimmten Grad zwischen der extrahierten Merkmalsfolge und einer der DB-Merkmalsfolgen die Synchronisationsinformation bzw. Zeitinformation dieser DB-Merkmalsfolge der extrahierten Merkmalsfolge zugeordnet wird bzw. eine Zeitdifferenz berechnet wird und diese dem Hauptsignal bzw. dem Zusatzsignal zugeordnet wird, wobei die Zeitdifferenz zu allen Extraktionszeitpunkten des Hauptsignals bzw. des Zusatzsignals hinzugefügt wird, wodurch den gleichen Merkmalsfolgen im Hauptsignal und im Zusatzsignal die gleiche Synchronisationsinformation bzw. die gleiche Zeitinformation zugeordnet ist.

Gemäß einer ersten Variante werden die Synchronisationsinformationen an die jeweiligen Signale gekoppelt. Das heißt, dass die am Synchronisationsserver 5 erzeugten Synchronisationsinformationen zum Hauptsignal 4 an das Hauptsignal gekoppelt werden und die am Zusatzsignal-Synchronisationsserver 7 erzeugten Synchronisationsinformationen an die entsprechenden Zusatzsignale gekoppelt werden. Die Synchronisationsinformationen werden zusammen mit den entsprechenden Signalen von dem jeweiligen Server 5, 7 zum Abspielgerät 6 übertragen. Zusatzsignale werden nur vom Web-Server 8 an das Abspielgerät 6 übermittelt, wenn die entsprechenden Zusatzsignale vom Abspielgerät 6 angefordert worden sind.

Am Abspielgerät 6 wird dann das Hauptsignal 4 und das angeforderte Zusatzsignal ausgegeben. Diese beiden Signale werden anhand der mit übertragenen Synchronisationsinformationen synchronisiert, wobei die Synchronisationsinformationen Zeitmarker (z. B. die synchronisierten Extraktionszeitpunkte) enthalten, anhand welcher das Abspielgerät erkennen kann, wann das Zusatzsignal synchron zum Hauptsignal auszugeben ist. Die Synchronisationsinformationen werden bei dieser Variante in einer Art Wasserzeichen den entsprechenden Signalen eingeprägt.

An dieser Variante ist vorteilhaft,
- dass die Synchronisierung am Abspielgerät einfach ist, da die beiden Signale, das Hauptsignal und das Zusatzsignal, lediglich anhand ihrer Zeitmarker zueinander synchron auszugeben sind, und
- dass zum Übertragen der Synchronisationsinformationen zwischen den Synchronisationsservern 5, 7 und dem Abspielgerät keine zusätzlichen Übertragungswege notwendig sind.

Nachteilig an dieser Variante ist,
- dass das Hauptsignal und das Zusatzsignal an einem gemeinsamen Abspielgerät auszugeben sind, und
- dass das Hauptsignal und das Zusatzsignal durch das Einfügen der Synchronisationsinformationen verändert werden müssen. Diese Zusatzinformationen können bei Empfängern der entsprechenden Signale, die diese Informationen nicht nutzen, stören. Das Integrieren der Synchronisationsinformationen in die zu übertragenden Signale verzögert die Übertragung.

Bei einer weiteren Variante dieses Ausführungsbeispiels werden die Synchronisationsinformationen nicht an das Hauptsignal und die Zusatzsignale gekoppelt, sondern separat an das Abspielgerät 6 übertragen. Die Synchronisationsinformationen enthalten jeweils eine Zeitinformation, welche an ein bestimmtes Kennzeichen des jeweiligen Signales gekoppelt ist. Ist das Signal ein definierter Abschnitt mit einem definierten Anfang, dann kann das Zeitsignal auf diesen Anfangspunkt bzw. Startpunkt Bezug nehmen. Dies kann insbesondere bei Zusatzsignalen zweckmäßig sein, welche jeweils nur eine kurze Zusatzinformation, welche beispielsweise einige 10 Sekunden bis zu einigen Minuten dauert und zusätzlich zum Hauptsignal ausgegeben werden kann. Dann kann das Abspielgerät anhand des Startpunktes und der jeweiligen Zeitinformation das Zusatzsignal zum Hauptsignal synchronisieren. Ist ein solcher Startpunkt in dem jeweiligen Signal nicht vorhanden, dann muss die Zeitinformation in Bezug zu einem anderen Bezugspunkt stehen. Dieser Bezugspunkt kann beispielsweise eine Merkmalsfolge im jeweiligen Signal sein. Diese Merkmalsfolge kann an einer beliebigen Stelle im Signal auftreten. Am Abspielgerät ist dann ein Modul vorzusehen, das die Merkmalsfolge aus dem jeweiligen Hauptsignal und/oder Zusatzsignal extrahieren kann und mit der mit den Synchronisationsinformationen mitgelieferten Merkmalsfolge vergleichen kann. Hierdurch ist es möglich, ohne einen eindeutig im Hauptsignal oder Zusatzsignal definierten Startpunkt einen eindeutigen Bezug der Zeitinformation zu dem jeweiligen Hauptsignal bzw. Zusatzsignal zu erhalten. Nachteilig an dieser Variante ist, dass am Abspielgerät ein Modul zum Extrahieren der Merkmalsfolge und zum Vergleichen der extrahierten Merkmalsfolge mit dem in den Synchronisationsinformationen enthaltenen Merkmalsfolgen vorhanden sein muss. Vorteilhaft ist hingegen, dass bei dieser Variante das Zusatzsignal und/oder das Hauptsignal nicht verändert werden müssen und in der ursprünglichen Form übertragen werden können.

Gemäß einer dritten Variante des ersten Ausführungsbeispiels werden an dem Abspielgerät 6 vorhandene Abspielgeräteuhr 13, die Synchronisationsserveruhr 11 und die Zusatzsignal-Synchronisationsserveruhr 12 synchronisiert. Hierbei wird die Abspielgeräteuhr 13 jeweils paarweise mit der Synchronisationsserveruhr 11 bzw. der Zusatzsignal-Synchronisationsserveruhr 12 synchronisiert.

Weiterhin sind die Übertragungszeiten des Hauptsignals vom Synchronisationsserver 5 zum Abspielgerät 6 als auch die Übertragungszeit vom Zusatzsignal-Synchronisationsserver 7 zum Abspielgerät 6 bekannt. Die Übertragungswege sind hierbei derart ausgebildet, dass die Übertragungszeiten konstant bleiben. Bei kurzen Übertragungswegen, wie z. B. Bluetooth-Strecken sind die Übertragungszeiten in der Regel konstant. Bei längeren Übertragungswegen, insbesondere wenn Daten über das Internet übertragen werden, variieren die Übertragungszeiten oft stark, sodass dann diese Variante nicht funktioniert.

Die in den Synchronisationsinformationen enthaltene Zeitinformation steht in Bezug zu einem bestimmten Ereignis am Synchronisationsserver 5 bzw. am Zusatz-Synchronisationsserver 7. Dieses Ereignis ist typischerweise der Zeitpunkt des Extrahierens einer bestimmten Signal-Merkmalsfolge, welche anhand der DB-Merkmalsfolgen identifiziert werden konnte. Hierdurch ist bekannt, wann das Hauptsignal bzw. das Zusatzsignal mit der entsprechenden Signal-Merkmalsfolge an den entsprechenden Synchronisationsserver 5, 7 durchgeleitet worden ist. Da auch die Übertragungszeit von dem jeweiligen Synchronisationsserver 5, 7 bis zum Abspielgerät 6 bekannt ist, kann daraus bestimmt werden, wann die Signalmerkmalsfolgen am Abspielgerät 6 eintreffen. Da diese Signalmerkmalsfolgen des Hauptsignals und des entsprechenden Zusatzsignals identifiziert worden sind, kann das Zusatzsignal zum Hauptsignal zeitlich in Bezug gesetzt werden, das heißt, dass das Zusatzsignal zum Hauptsignal synchronisiert werden kann. Der entsprechende zeitliche Bezug ist in den Synchronisationsinformationen enthalten.

Bei dieser Variante ist die Abspielgeräteuhr 13 jeweils mit der Synchronisationsserveruhr 11 und der Zusatzsignal-Synchronisationsserveruhr 12 zu Synchronisieren und die Übertragungszeiten von den einzelnen Synchronisationsservern 5, 7 zum Abspielgerät muss bekannt und stabil sein. Hierbei ist jedoch von Vorteil, dass weder das Hauptsignal noch das Synchronisationssignal verändert werden müssen. Weiterhin muss am Abspielgerät kein Modul zum Extrahieren von Merkmalsfolgen integriert sein. Dies ist eine sehr einfache Lösung, welche eine zuverlässige Synchronisation erlaubt.

Ein weiterer Vorteil der dritten Variante liegt darin, dass diese dritte Variante einfach auch mit zwei unterschiedlichen Abspielgeräten ausführbar ist, wobei ein Abspielgerät zum Abspielen des Hauptsignals und ein zweites Abspielgerät zum Abspielen des Zusatzsignales vorgesehen ist. Eine Abspielgeräteuhr des Hauptsignalabspielgerätes ist mit der Synchronisationsserveruhr 11 des Synchronisationsservers 5 und eine Zusatzsignal-Abspielgeräteuhr ist mit der Zusatzsignal-Synchronisationsserveruhr 12 zu synchronisieren. Weiterhin sind die beiden Abspielgeräteuhren zueinander zu synchronisieren.

Das Hauptsignal-Abspielgerät kann beispielsweise ein Fernseher sein und das Zusatzsignal-Abspielgerät ein Mobiltelefon. Das Hauptsignal und das Zusatzsignal werden synchron zueinander ausgegeben.

Allen drei oben erläuterten Varianten ist gemeinsam, dass als Hauptsignal ein vom Sendestudio 3 ausgegebenes Hauptsignal am Abspielgerät ausgegeben werden kann und zusätzlich als Zusatzsignal ein Signal einer Kamera 2, welche nicht die Kamera sein muss, mit welcher das Hauptsignal ausgegeben wird. Ein Benutzer kann somit frei die Kamera wählen, mit welcher er die Vorführung auf der Bühne 1 betrachten möchte. Da all diese Signale eine ähnliche Ton-Spur besitzen, können sie einfach und zuverlässig mittels der Ton-Spuren zueinander synchronisiert werden.

Weiterhin können die oben erläuterten Varianten miteinander kombiniert werden, indem beispielsweise das Zusatzsignal mit dem Abspielgerät gemäß einer der drei Varianten und das Zusatzsignal gemäß einer der anderen Varianten an das Abspielgerät übertragen und mit dem Zusatzsignal synchronisiert werden.

Zur Übertragung des Hauptsignals wird grundsätzlich die dritte Variante bevorzugt, wohingegen zum Übertragen der Zusatzsignale alle drei Varianten gleichwertig sind.

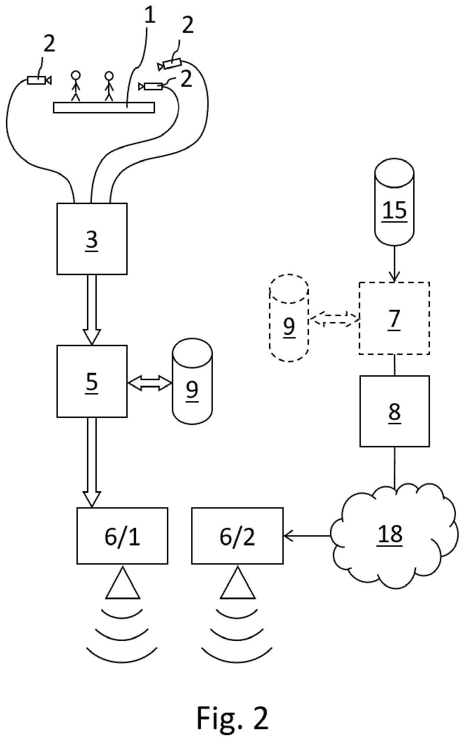

Nachfolgend wird ein zweites Ausführungsbeispiel (Figur 2) erläutert, wobei gleiche Elemente wie beim ersten Ausführungsbeispiel mit den gleichen Bezugszeichen versehen sind. Für gleiche Elemente gelten die oben angeführten Erläuterungen, sofern nachfolgend nichts anderes hierzu ausgeführt ist.

Beim zweiten Ausführungsbeispiel ist wiederum eine Bühne 1 vorgesehen, welche mit mehreren Kameras 2 abgetastet wird. Die Signale der Kameras 2 werden in einem Sendestudio 3 in ein Hauptsignal 4 umgesetzt. Das Sendestudio 3 ist mit einem Synchronisationsserver 5 verbunden. Der Synchronisationsserver 5 ist an einen Datenbankserver 9 gekoppelt, welcher eine Datenbank mit DB-Merkmalsfolgen und den zugehörigen Synchronisationsinformationen enthält.

Ein HS-Abspielgerät 6/1 ist mit dem Synchronisationsserver 5 verbunden, um das Hauptsignal zu empfangen und abzuspielen. Es können wiederum mehrere HS-Abspielgeräte 6/1 vorgesehen sein.

Das zweite Ausführungsbeispiel unterscheidet sich vom ersten Ausführungsbeispiel darin, dass eine unabhängige Quelle für Zusatzinformationen vorgesehen ist. Diese Quelle ist beispielsweise ein Zusatzinformationen-Datenbankserver 15. Wird auf der Bühne 1 ein Konzert mit mehreren Liedern gegeben, dann kann es zweckmäßig sein, im Zusatzinformation-Datenbankserver 15 die entsprechenden Liedtexte vorzusehen. Der Zusatzinformation-Datenbankserver 15 kann jedoch auch fremdsprachige Übersetzungen der entsprechenden Liedtexte als Ton-Spuren enthalten. Es gibt Lieder, welche in vielen Sprachen bekannt sind, wie zum Beispiel das Kinder-Schlaflied "Bruder Jakob".

Vorzugsweise sind die am Zusatzinformation-Datenbankserver 15 gespeicherten Zusatzinformationen bereits mit entsprechenden Synchronisationsinformationen versehen. Bei Liedern kann dies der Anfangszeitpunkt und weitere Zeitmarker während des Liedes sein.

Der Zusatzinformation-Datenbankserver 15 ist mit einem Web-Server 8 verbunden. Über das Internet 18 können die Zusatzinformationen vom Web-Server 8 abgerufen werden. Ein ZS-Abspielgerät 6/2 zum Abspielen eines Zusatzsignals ist mit dem Internet 14 verbunden. Der Synchronisationsserver 5 weist auch eine Verbindung zum Internet 14 auf, so dass am Synchronisationsserver 5 erzeugte Synchronisationsinformationen über das Internet 14 dem ZS-Abspielgerät 6/2 zugeleitet werden können.

Am Synchronisationsserver 5 ist wiederum eine Synchronisationsuhr 11 vorgesehen, welche mit einer Abspielgeräteuhr 13/1 des HS-Abspielgerätes und mit einer Abspielgeräteuhr 13/2 des ZS-Abspielgerätes 6/2 jeweils synchronisiert ist. Bei dem zweiten Ausführungsbeispiel ist die Synchronisationsuhr 11 des Synchronisationsservers 5 die Hauptuhr, wohingegen beim ersten Ausführungsbeispiel die Abspielgeräteuhr 13 die Hauptuhr war, zu der alle weiteren Uhren synchronisiert sind.

Am Synchronisationsserver 5 werden Synchronisationsinformationen durch Extrahieren von Signalmerkmalsfolgen aus dem Hauptsignal und Vergleichen mit entsprechenden DB-Merkmalsfolgen des Datenbankservers 9 erzeugt. Die Erzeugung der Synchronisationsinformationen entspricht im Wesentlichen dem des ersten Ausführungsbeispiels.

Weiterhin ist die Übertragungszeit zum Übertragen des Hauptsignals vom Synchronisationsserver 5 zum HS-Abspielgerät 6/1 bekannt, so dass bei Kenntnis des Zeitpunktes, wann ein bestimmter Abschnitt des Hauptsignals am Synchronisationsserver 5 durchgeleitet wird, auch bekannt ist, wann dieser Abschnitt am HS-Abspielgerät 6/1 ausgegeben wird.

Die Synchronisationsinformationen, welche vom Synchronisationsserver 5 an das ZS-Abspielgerät 6/2 übermittelt werden, enthalten somit Zeitinformationen, welche jeweils einen Zeitpunkt des Hauptsignals relativ zu einer detektierten Signal-Merkmalsfolge beschreiben und Identifikationsmarker, welche den Inhalt des Hauptsignals beschreiben. Im vorliegenden Ausführungsbeispiel geben die Identifikationsmarker an, welches Lied mit dem Hauptsignal wiedergegeben wird. Die Identifikationsmarker können optional noch weitere Angaben, wie Strophe, Zeile oder Textausschnitte des Liedes enthalten. Diese Textausschnitte sind vorzugsweise Textausschnitte an der Stelle, an welcher eine der Signalmerkmalsfolgen detektiert worden ist. Die Zeitinformation enthält vorzugsweise eine Angabe, wann die entsprechende Signal-Merkmalsfolge am Synchronisationsserver 5 extrahiert worden ist.

Anhand dieser Synchronisationsinformationen weist das ZS-Abspielgerät 6/2, wann welches Lied am HS-Abspielgerät 6/1 ausgegeben wird. Dementsprechend kann das ZS-Abspielgerät die vom Zusatzinformations-Datenbankserver 15 bzw. vom Web-Server 8 erhaltenen und bereits vorab mit Synchronisationsinformationen versehenen Zusatzsignale synchron zur Ausgabe des Hauptsignals am HS-Abspielgerät 6/1 das Zusatzsignal am ZS-Abspielgerät 6/2 ausgeben.

Optional kann zwischen dem Zusatzinformations-Datenbankserver 15 und dem Web-Server 8 ein Zusatzsignal-Synchronisationsserver 7 vorgesehen sein, der ähnlich wie im ersten Ausführungsbeispiel ausgebildet ist. Sind die Zusatzinformationen Liedtext, welche beispielsweise in ASCII codiert sind, dann enthalten die Zusatzinformationen keine Audio-Signale. Jedoch können aus den im Text enthaltenen Wörtern Audio-Signal-ähnliche Merkmalsfolgen erzeugt werden, wie es von der Sprachsynthese bekannt ist. Diese Merkmalsfolgen können dann wiederum mit DB-Merkmalsfolgen verglichen werden, die in einem weiteren Datenbankserver 16 vorgehalten werden. Hierdurch ist es auch möglich, Textabschnitte der Lieder unmittelbar mit entsprechenden, im Datenbankserver 16 gespeicherten Textabschnitten zu vergleichen. Hierbei bilden die einzelnen Buchstaben der Textabschnitte die entsprechenden Merkmale. Den im Datenbankserver 16 gespeicherten Merkmalsfolgen sind jeweils Synchronisationsinformationen zugeordnet, welche den Zusatzinformationen bzw. Zusatzsignalen hinzugefügt werden können.

Alternativ können auch gesprochene oder gesungene Texte durch Spracherkennung in Textform gebracht werden. Die Merkmale sind dann Text- und/oder Buchstabenfolgen, die ebenfalls in der Datenbank vorrätig sind.

Am ZS-Abspielgerät 6/2 kann somit synchron zu der Bild- und Ton-Wiedergabe des auf der Bühne 1 stattfindenden Musikkonzertes, welche am HS-Abspielgerät 6/1 ausgegeben wird, der entsprechende Liedtext angezeigt werden.

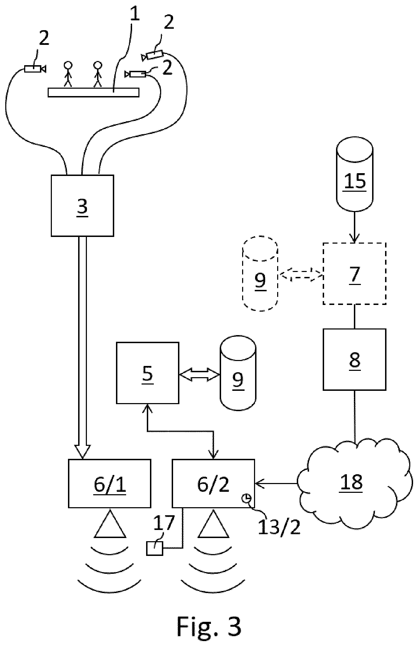

Ein drittes Ausführungsbeispiel (Figur 3) entspricht im Wesentlichen dem zweiten Ausführungsbeispiel und unterscheidet sich von diesem dadurch, dass der Synchronisationsserver 5 unabhängig von der Verbindung zwischen der Sendestation 3 und den HS-Abspielgeräten 6/1 zum Abspielen des Hauptsignals ausgebildet ist. Weiterhin weist das ZS-Abspielgerät 6/2 einen Sensor 17 zum Detektieren zumindest eines Teils des durch das HS-Abspielgerät 6/1 ausgegebenen Hauptsignals auf. Dieser Sensor 17 kann ein Mikrofon zum Erfassen des TonSignals des Hauptsignals 4 oder eine Kamera zum Erfassen der Bildausgabe des Hauptsignals 4 sein.

Das ZS-Abspielgerät 6/2 ist mit einem Modul zum Extrahieren der Signalmerkmalsfolgen des Hauptsignals 4 ausgebildet, wobei diese Signalmerkmalsfolgen aus dem mittels des Sensors 17 abgetasteten Hauptsignal 4 extrahiert werden. Der Extraktionszeitpunkt kann mittels der ZS-Abspielgeräteuhr 13/2 erfasst werden. Da, wie es oben bereits erläutert ist, der Prozess des Extrahierens selbst zeitlichen Schwankungen unterliegen kann, kann es zweckmäßig sein, die Signalzeitinformation zur Bestimmung des Extraktionszeitpunktes zu verwenden. Bei dieser Ausführungsform kann auch anstelle einer immanent im Hauptsignal enthaltenen Signalzeitinformation eine bei der Aufnahme mit dem Sensor 17 (Mikrofon) hinzugefügte Signalzeitinformation verwendet werden, mit welcher der Aufnahmezeitpunkt des Signals beschrieben wird. Eine solche Signalzeitinformation ist unabhängig von zeitlichen Schwankungen des Extraktionsprozesses und ermöglicht eine eindeutige zeitlich relative Anordnung der extrahierten Signalmerkmalsfolgen.

Die Signalmerkmalsfolgen werden an den Synchronisationsserver 5 übermittelt und dort wie beim ersten und zweiten Ausführungsbeispiel anhand der DB-Merkmalsfolgen aus dem Datenbankserver 9 analysiert und identifiziert. Am Synchronisationsserver 5 werden wiederum Synchronisationsinformationen erzeugt, wobei sich die Synchronisationsinformationen des dritten Ausführungsbeispiels von den Synchronisationsinformationen der vorhergehenden Ausführungsbeispiele dadurch unterscheiden, dass für sie ausschließlich die Zeit der ZS-Abspielgeräteuhr 13/2 gilt. Die Synchronisationsinformationen werden vom Synchronisationsserver über das Internet 14 zum ZS-Abspielgerät 6/2 übermittelt. Dort wird das Zusatzsignal 10 anhand der Synchronisationsinformationen wie bei den vorherigen Ausführungsbeispielen zum Hauptsignal 4 synchronisiert, wobei hierbei jedoch die Synchronisation alleine anhand der mit der ZS-Abspielgeräteuhr 13/2 erfassten Abspielzeit ausgeführt wird. Es besteht keine Notwendigkeit, unterschiedliche Uhrzeiten zwischen dem ZS-Abspielgerät 6/2, dem HS-Abspielgerät 6/1 oder dem Synchronisationsserver 5 zu synchronisieren.

Alternativ können anstatt der Signalmerkmalsfolgen auch kurze Signalsequenzen, wie z.B. Musik-Snippets, an den Synchronisationsserver 5 übermittelt werden, welche als Zusatzsignal auszugeben sind. Dieser identifiziert dort die Signalmerkmalsfolgen der Signalsequenzen und analysiert und identifiziert sie anhand der DB-Merkmalsfolgen aus dem Datenbankserver 9. Die Signalsequenzen sind in der Regel nicht länger als 60 s und insbesondere nicht länger als 30 s bzw. nicht länger als 15 s.

Das dritte Ausführungsbeispiel kann auch derart abgewandelt werden, dass das eine Modul zum Extrahieren der Signalmerkmalsfolgen am Synchronisationsserver 5 an Stelle am ZS-Abspielgerät 6/2 angeordnet ist.

Das dritte Ausführungsbeispiel ist eine sehr elegante Lösung zum Ausgeben von Zusatzsignalen an ein separates ZS-Abspielgerät 6/2. Bei diesem dritten Ausführungsbeispiel kann das Zusatzsignal zu einem Hauptsignal synchronisiert werden, wobei die Übertragungsdauer beispielsweise zwischen der Sendestation 3 und dem HS-Abspielgerät 6/1 in einem vorbestimmten Rahmen frei variieren kann.

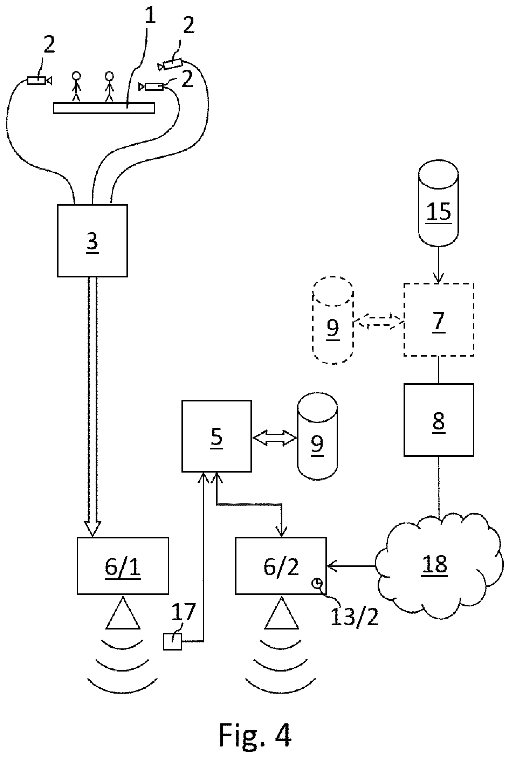

Ein viertes Ausführungsbeispiel (Figur 4) entspricht im Wesentlichen dem dritten Ausführungsbeispiel und unterscheidet sich von diesem dadurch, dass der Synchronisationsserver 5 den Sensor 17 aufweist. Der Synchronisationsserver 5 wird auf einer lokalen Recheneinheit, z. B. einem Computer, einem Minicomputer oder auch einer Spielekonsole ausgeführt. Wie im vorangegangenen Ausführungsbeispiel kann der Sensor 17 ein Mikrofon zum Erfassen des Tonsignales des Hauptsignals 4 oder eine Kamera zum Erfassen der Bildausgabe des Hauptsignals 4 sein.

Der Synchronisationsserver 5 ist mit einem Modul zum Extrahieren der Signalmerkmalsfolgen des Hauptsignals 4 ausgebildet, wobei diese Signalmerkmalsfolgen aus dem mittels des Sensors 17 abgetasteten Hauptsignal 4 extrahiert werden.

Der Zeitpunkt der Extraktion wird mittels der Synchronisationsuhr 11 erfasst. Die Signal-merkmalsfolgen werden am Synchronisationsserver 5 wie beim ersten, zweiten und dritten Ausführungsbeispiel anhand der DB-Merkmalsfolgen aus dem Datenbankserver 9 analysiert und identifiziert. Am Synchronisationsserver 5 werden wiederum Synchronisationsinformationen erzeugt, wobei für die Synchronisationsinformationen ausschließlich die Synchronisationsuhr 11 gilt. Die Synchronisationsinformationen werden vom Synchronisationsserver 5 über ein Intranet 14 oder eine andere Datenverbindung wie z. B. Bluetooth zum ZS-Abspielgerät 6/2 übermittelt. Dort wird das Zusatzsignal 10 anhand der Synchronisationsinformation wie bei den vorherigen Ausführungsbeispielen zum Hauptsignal 4 synchronisiert.

Dabei wird die Uhrzeit der Synchronisationsuhr 11 mit der ZS-Abspielgeräteuhr 13/2 synchronisiert.

Der Hauptunterschied des vierten Ausführungsbeispiels zu den vorherigen liegt darin, dass der Synchronisationsserver 5 nicht über das Internet angesteuert wird, sondern sich lokal bei einem Nutzer befindet. Dies hat den Vorteil, dass die Synchronisation immer funktioniert, selbst wenn das Internet ausgefallen ist, da sie nicht vom Internet abhängig ist.

Der Datenbankserver 9 kann jedoch über das Internet angesteuert werden oder er befindet sich ebenfalls auf derselben Recheneinheit wie der Synchronisationsserver 5.

Bei dem oben erläuterten dritten oder vierten Ausführungsbeispiel kann der Synchronisationsserver 5, der Datenbankserver 9 und das ZS-Abspielgerät 6/2 auf einem einzigen Gerät, wie z.B. einem Computer (Desktop, Laptop, etc.) oder einem Mobiltelefon ausgebildet sein.

Grundsätzlich kann jedoch auch der Synchronisationsserver 5 auf einer vom Abspielgerät 6/2 separat ausgebildeten Hardware vorgesehen sein. Der Synchronisationsserver 5 kann mit dem Abspielgerät 6/2 über das Internet verbunden sein. Die zwischen dem Synchronisationsserver 5 auf dem Abspielgerät ausgetauschte Datenmenge ist gering.

Allen oben erläuterten Ausführungsbeispielen ist gemeinsam, dass Synchronisationsinformationen anhand einer oder mehrerer Signalmerkmalsfolgen, welche aus dem Hauptsignal extrahiert werden, erzeugt werden. Hierdurch ist es möglich, Zusatzsignale zu einem Hauptsignal zu synchronisieren (on the fly), von dem vorab keine bestimmten Zeitpunkte, wie zum Beispiel ein Startzeitpunkt, bekannt sind. Selbstverständlich können diese Verfahren auch angewandt werden, wenn ein vorab bestimmter Zeitpunkt im jeweiligen Signal ausgewiesen ist, an dem man sich orientieren kann.

Anhand dieser Synchronisationsinformationen kann die Synchronisation der Zusatzsignale zum Hauptsignal auf unterschiedlichste Art und Weise erfolgen. Oben sind einige Beispiele erläutert. Im Rahmen der Erfindung sind jedoch noch unzählige Abwandlungen möglich, die für die jeweilige Anwendung entsprechend angepasst und ausgebildet sein können.

Ein weiterer Aspekt der Erfindung ist es, die Qualität des Zusatzsignal-Streamings neben der zur Verfügung stehenden Bandbreite auch anhand der zur Verfügung stehenden Bufferzeit einzustellen. Das Zusatzsignal-Abspielgerät 6/2 empfängt dabei die Synchronisationsinformationen und sendet eine Anfrage an den Zusatzinformationen-Datenbankserver 14, welche Zusatzsignale zu welcher Zeit zur Verfügung stehen. Wird ein entsprechendes Zusatzsignal 10 gefunden, ist auch die Bufferzeit bekannt. Die Bufferzeit beschreibt dabei die Zeit, die dem Zusatzsignal noch zur Verfügung steht, bevor es abgespielt werden muss, um synchron mit dem Hauptsignal zu sein. Bei dieser Abfrage kann auch grob die zur Verfügung stehende Bandbreite des Netzwerkes überprüft werden. Je nach Bandbreite und Bufferzeit wird automatisch eine andere Encodierungs-Stufe gewählt. Während der Bufferzeit wird das Zusatzsignal codiert, vom Zusatzsignalserver zum Abspielgerät übertragen und dann wieder decodiert. Je nach Encodierungs-Stufe ist die zu übertragende Datei, beziehungsweise der Datei-Teil unterschiedlich groß und benötigt unterschiedlich lange für die Übertragung. Es muss daher ein Gleichgewicht aus Encodierungszeit und Übertragungszeit gefunden werden, sodass die Bufferzeit möglichst gut ausgenutzt wird und die Qualität des Zusatzsignals möglichst hoch ist.

Dieses Verfahren kann auch so ausgeführt sein, dass der oder die Server die Signale in unterschiedlichen Qualitäten bzw. unterschiedlichen Encodierungs-Stufen codieren und gleichzeitig zum Abruf zur Verfügung stellen und das Abspielgerät, das das Signal abspielen soll, das Signal in der geeigneten Qualität bzw. Encodierungs-Stufe auswählt bzw. abruft.

Ist die Bufferzeit sehr kurz, zum Beispiel bei Live-Übertragungen, so ist es vorteilhaft, wenn die Chunk-Länge des zu übertragenen Zusatzsignals möglichst kurz gewählt wird. Das Signal kann in mehreren Chunks unterteilt übertragen werden, wobei die Chunks zunächst generiert werden müssen. Je kürzer die Chunks sind, desto aufwendiger ist die Handhabung der Chunks, denn sie werden einzeln übertragen. Jedoch muss man beim Abrufen eines Chunks mindestens so lange warten, wie das jeweilige Chunk lang ist. Daher kann man umso schneller reagieren, je kürzer die Chunks sind. Die Chunk-Länge kann dabei soweit reduziert werden, dass sie einem einzelnen Frame entsprechen. Bei 25 Bildern pro Sekunde entspricht dies 40 ms. Dadurch sind sehr schnelle Übertragungen möglich. Bei gewissen Codecs, wie zum Beispiel dem h265-Codec, sind auch "Zero Latency"-Einstellungen möglich. Das bedeutet, dass die Zeit zum Encodieren und anschließendem wieder Decodieren sehr kurz ist und bspw. unter 1 s liegt. Eine gewisse Latenz ist nicht zu vermeiden. Jedoch wird bei einer Einstellung "Zero Latency" durch das entsprechende Codec-Verfahren keine zusätzliche Latenz verursacht. Die Bufferzeit wird somit nahezu ausschließlich für die eigentliche Übertragung des Signals benötigt, die bei entsprechend hoher Bandbreite auch sehr reduziert werden kann. Zum Beispiel kann bei einem Live-Konzert, bei dem der Veranstalter eine Kameraansicht über einen Webserver an die Besucher mit Smartphones zur Verfügung stellt auch eine entsprechende WLAN Infrastruktur bereit stellen, sodass das Videosignal nahezu verzögerungsfrei übertragen werden kann.

Bei diesem Aspekt kann somit die Codierung des Zusatzsignales und/oder der Übertragungsweg zum Übertragen des Zusatzsignales zum Zusatzsignal-Abspielgerät 6/2 in Abhängigkeit von den ermittelten Synchronisationsinformationen automatisch ausgewählt werden. Enthalten die Synchronisationsinformationen eine Information, dass wenig Zeit zur Übermittlung des Zusatzsignales zur Verfügung steht, dann ist es zweckmäßig, den Datenumfang des Zusatzsignales durch eine entsprechend komprimierende Codierung zu verringern und einen schnellen Übertragungsweg auszuwählen. Weiterhin sollte die Codierung sehr schnell erfolgen. Eine starke Reduzierung des Datenumfanges und eine schnelle Komprimierung beinträchtigen oft die Qualität des Zusatzsignals. Steht hingegen mehr Zeit zur Verfügung, dann kann eine aufwendigere Codierung eingesetzt werden und/oder eine geringe Komprimierungsrate verwendet werden, wodurch eine höhere Qualität des Zusatzsignales erhalten wird.

Bei allen oben erläuterten Ausführungsbeispielen wird ein Datenbankserver 9 mit einer vorab vorbereiteten Datenbank mit DB-Merkmalsfolgen und Synchronisationsinformationen vorgesehen.

Im Rahmen der Erfindung wird die Datenbank am Datenbankserver 9 während des Betriebes erzeugt (Live-Datenbank). Dies ist vor allem dann zweckmäßig, wenn ein Hauptsignal vorhanden ist, zu dem Zusatzsignale synchron ausgegeben werden sollen, wobei das Hauptsignal bisher noch nicht bekannt war. In einem solchen Fall werden aus dem Hauptsignal Merkmalsfolgen extrahiert und jeweils die beim Extrahieren vorliegende Zeit erfasst. Diese extrahierten Merkmalsfolgen werden zusammen mit dem Extraktionszeitpunkt in der Datenbank hinterlegt. Anstelle des Extraktionszeitpunktes oder zusätzlich kann auch eine im Hauptsignal enthaltene Zeitinformation extrahiert werden und zusammen mit den Merkmalsfolgen am Datenbankserver 9 gespeichert werden.

Die Zeitinformationen bilden hierbei die oder einen Teil der Synchronisationsinformationen. Die so während des Betriebs des Systems erzeugte Datenbank kann mit einer weiteren Datenbank abgeglichen werden, in welcher unterschiedliche Signale bereits vorab in Merkmalsfolgen zerlegt gespeichert sind, wobei diese Datenbank auch Metainformationen umfassen kann, die den Inhalt, die Zeitpunkte und die Bedeutung dieser Merkmalsfolgen bzw. dieses Signals beschreiben. In dieser Datenbank können unterschiedlichste Medienströme als Merkmalsfolgen hinterlegt sein. Durch einen Vergleich mit dieser weiteren Datenbank können die Merkmalsfolgen der "online" bzw. "on-the-fly" erzeugten Datenbank Metainformationen insbesondere semantische Informationen bzw. Bedeutungsgehalte zugeordnet werden.

Eine derartige online-Erzeugung der Datenbank am Datenbankserver 9 ist bei allen oben erläuterten Ausführungsbeispielen möglich. Ein Nutzer kann eine solche Live-Datenbank auch vor Ort an seinem Endgerät (Computer, Mobiltelefon, etc.) lokal erstellen.

### Bezugszeichenliste

- 1: Bühne
- 2: Kamera
- 3: Sendestudio
- 4: Hauptsignal
- 5: Synchronisationsserver
- 6: Abspielgerät
- 7: Zusatzsignal-Synchronisationsserver
- 8: Web-Server
- 9: Datenbankserver
- 10: Zusatzsignal
- 11: Synchronisationsuhr
- 12: Zusatzsignal-Synchronisationsuhr
- 13: Abspielgeräteuhr
- 14: Zusatzinformationen-Datenbankserver
- 16: Datenbankserver
- 17: Sensor
- 18: Internet

## Patentansprüche

1. Verfahren zum Synchronisieren von einem Zusatzsignal zu einem Hauptsignal, das mit einem Broadcasting-Verfahren an viele Abspielgeräte übermittelt wird, umfassend die Schritte:
- Erzeugen von DB-Merkmalsfolgen für eine Datenbank von dem Hauptsignal, während das Hauptsignal von einer Sendestation zu einem Abspielgerät übertragen wird,
- Erzeugen von Synchronisationsinformationen zu dem Hauptsignal in einem Synchronisationsserver, indem zumindest eine Signalmerkmalsfolge des Hauptsignals extrahiert und mit in der Datenbank gespeicherten DB-Merkmalsfolgen verglichen wird, wobei die Signalmerkmalsfolge als auch die DB-Merkmalsfolge Merkmale im Frequenzraum umfassen und bei einer Übereinstimmung der Signalmerkmalsfolge mit einer der DB-Merkmalsfolgen zu einem vorbestimmten Grad Synchronisationsinformationen der übereinstimmenden DB-Merkmalsfolge dem Hauptsignal an einer durch die Signalmerkmalsfolge vorgegebene Position zugeordnet wird,
wobei eine Tonspur des Hauptsignals abschnittsweise durch eine Fast-Fourier-Transformation in den Frequenzraum transformiert wird,
wobei die Abschnitte, die in den Frequenzraum transformiert werden, der Tonspur nicht länger als 50 ms sind,
wobei die Merkmale Frequenzspitzen sind, welche über einen bestimmten Schwellenwert liegen,
- Übertragen der Synchronisationsinformationen zu einem der Abspielgeräte, das anhand der Synchronisationsinformationen ein Zusatzsignal synchron zum Hauptsignal ausgibt.

2. Verfahren nach Anspruch 1,
**dadurch gekennzeichnet,**
**dass** der Zeitpunkt der Signalmerkmalsfolge im Hauptsignal bestimmt wird, welche mit der DB-Merkmalsfolge übereinstimmt, und dieser Zeitpunkt wird als Extraktionszeitpunkt zur Erzeugung der Synchronisationsinformation verwendet, oder
**dass** der DB-Merkmalsfolge eine Zeitinformation zugeordnet ist, welche einen bestimmten DB-Zeitpunkt relativ zur DB-Merkmalsfolge definiert, der zur Erzeugung der Synchronisationsinformationen verwendet wird.

3. Verfahren nach Anspruch 1 oder 2,
**dadurch gekennzeichnet,**
**dass** dem Zusatzsignal Synchronisationsinformationen zugeordnet werden, indem eine Signalmerkmalsfolge des Zusatzsignals extrahiert und mit in einer Datenbank gespeicherten DB-Merkmalsfolgen verglichen wird, wobei bei einer Übereinstimmung zu einem vorbestimmten Grad der Signalmerkmalsfolge mit einer der DB-Merkmalsfolgen Synchronisationsinformationen dem Zusatzsignal an einer durch die Signalmerkmalsfolge vorgegebene Position zugeordnet wird, oder
manuell Synchronisationsinformationen dem Zusatzsignal zugeordnet werden, oder
ein Zusatzsignal verwendet wird, welchem bereits vorab Synchronisationsinformationen zugordnet sind.

4. Verfahren nach einem der Ansprüche 1 bis 3,
**dadurch gekennzeichnet,**
**dass** die Synchronisationsinformationen ein oder mehrere der folgende Daten umfasst
- eine Zeitinformation, welche einen Zeitpunkt des Haupt- und/oder Zusatzsignals relativ zu einer detektierten Signalmerkmalsfolge beschreibt,
- einen oder mehrere Identifikationsmarker, welche den Inhalt des Haupt- und/oder Zusatzsignals beschreiben,
- einen Zeitstempel, welcher einen bestimmten Zeitpunkt im Haupt- und/oder Zusatzsignal beschreibt,
- einen zeitlichen Offset, der das notwendige Zeitintervall zum Weiterleiten eines Haupt- und/oder Zusatzsignals von einer bestimmten Stelle eines Übertragungsweges bis zur tatsächlichen Ausgabe des Haupt- und/oder Zusatzsignals an dem Abspielgerät beschreibt.

5. Verfahren nach einem der Ansprüche 1 bis 4,
**dadurch gekennzeichnet,**
**dass** die Synchronisationsinformationen an einem Synchronisationsserver erzeugt werden, welcher unabhängig von einem Abspielgerät ausgebildet ist.

6. Verfahren nach einem der Ansprüche 1 bis 5,
**dadurch gekennzeichnet,**
**dass** am Abspielgerät das Zusatzsignal zum Hauptsignal synchronisiert wird, indem
- am Abspielgerät das Hauptsignal und das Zusatzsignal ausgegeben werden, welche jeweils als Synchronisationsinformationen einen oder mehrere Zeitmarker enthalten, anhand welcher das Abspielgerät das Zusatzsignal dem Hauptsignal synchron zuordnet, oder
- anhand einer am Abspielgerät mittels einer Uhr gemessenen Abspielzeit, zu der das Zusatzsignal mittels der Synchronisationsinformationen derart zugeordnet wird, dass das Zusatzsignal synchron zum Hauptsignal ausgegeben wird.

7. Verfahren nach einem der Ansprüche 1 bis 6,
**dadurch gekennzeichnet,**
**dass** wenn mehrere Signalmerkmalsfolgen zu einem vorbestimmten Grad mit entsprechenden DB-Merkmalsfolgen übereinstimmen, die mehreren Signalmerkmalsfolgen nach vorbestimmten Regeln bewertet werden, und dass die Signalmerkmalsfolge mit der besten Bewertung ausgewählt wird, um dem Hauptsignal an einer durch die Signalmerkmalsfolge vorgegebenen Position die Synchronisationsinformationen zuzuordnen.

8. Verfahren nach Anspruch 7,
**dadurch gekennzeichnet,**
**dass** die vorbestimmten Regeln eine oder mehrere der folgenden Regeln umfassen:
- Je größer die Anzahl der übereinstimmenden Merkmale einer Merkmalsfolge ist, desto besser ist die Bewertung.
- Je größer die Anzahl der übereinstimmenden Merkmale einer Merkmalsfolge im Verhältnis zu der Anzahl der in der Merkmalsfolge enthaltenen Merkmale ist, desto besser ist die Bewertung.
- Die Übereinstimmung der einzelnen Merkmale wird klassifiziert, wobei je geringer der Abstand der übereinstimmenden Merkmale ist, desto besser wird die entsprechende Übereinstimmung klassifiziert und diese Klassifizierung wird bei der Gesamtbewertung der Übereinstimmung einer Merkmalsfolge berücksichtigt.

9. Verfahren nach einem der Ansprüche 1 bis 8,
**dadurch gekennzeichnet,**
**dass** zum Kalibrieren einer Übertragungsstrecke von einem Server zu einem Abspielgerät und/oder der Latenz an einem Abspielgerät zum Ausgeben eines Mediensignals auf dem Abspielgerät ein Referenzsignal ausgegeben wird,
welches gleichzeitig von einem entsprechenden Sensor aufgenommen wird, wobei das ausgegebene Referenzsignal und das empfangene Referenzsignal miteinander verglichen werden, um ein zur Weiterleitung des Referenzsignales und der tatsächlichen Ausgabe am Abspielgerät notwendige Zeitintervall zu bestimmen, und
dieses Zeitintervall wird als zeitlicher Offset genutzt, um eine Ausgabezeit zu bestimmen, mit welcher ein Signal am Medienabspielgerät ausgegeben wird.

10. Verfahren nach Anspruch 9,
**dadurch gekennzeichnet,**
**dass** das Referenzsignal ein Audiosignal umfasst und der Sensor ein Mikrofon ist und/oder dass das Referenzsignal ein Videosignal umfasst und der Sensor eine Kamera ist.

11. Verfahren nach Anspruch 9 oder 10,
**dadurch gekennzeichnet,**
**dass** das Zeitintervall bestimmt wird, indem der Zeitpunkt des Absendens und der Zeitpunkt des Empfangens des Referenzsignales bestimmt werden, wobei aus der Zeitdifferenz dieser beiden Zeitpunkte das Zeitintervall abgeleitet wird, und das Messen zumindest eines der beiden Zeitpunkte durch einen Vergleich einer extrahierten Referenzsignalmerkmalsfolge mit einer oder mehreren vorab gespeicherten Referenzsignalmerkmalsfolgen ausgeführt wird.

12. Verfahren nach einem der Ansprüche 1 bis 11, wobei
das Zusatzsignal von einem von einem Abspielgerät unabhängig ausgebildeten Synchronisationsserver an das Abspielgerät übermittelt wird und am Synchronisationsserver Synchronisationsinformationen erzeugt werden, welche auf eine Serverzeit des Synchronisationsservers bezogen sind, die am Synchronisationsserver mit einer dort angeordneten Uhr gemessen wird, wobei am Abspielgerät eine Abspielgeräteuhr zum Messen der Abspielzeit vorgesehen ist, welche zumindest einmal mit der Serverzeit synchronisiert wird, und
ein Zeitdrift der Abspielzeit zur Serverzeit gemessen wird und dieser Zeitdrift bei der Synchronisierung des Zusatzsignals zum Hauptsignal mit berücksichtigt wird.

13. Verfahren nach Anspruch 12,
**dadurch gekennzeichnet,**
**dass** der Zeitdrift durch mehrmaliges Übertragen eines Zeitsignals der Serverzeit an das Abspielgerät oder der Abspielzeit an den Synchronisationsserver und Vergleichen des übertragenen Zeitsignals mit dem vor Ort vorhandenen Zeitsignal, um jeweils eine Zeitdifferenz zu berechnen, wobei anhand der Abweichungen der Zeitdifferenzen der Zeitdrift bestimmt wird.

14. Verfahren zum Synchronisieren von einem Zusatzsignal zu einem Hauptsignal nach einem der Ansprüche 1 bis 13, wobei
anhand der Synchronisationsinformationen bestimmt wird, wie viel Zeit zum Übermitteln des Zusatzsignales von einem vorbestimmten Server zu einem Abspielgerät zur Verfügung steht, und anhand dieser Zeit entweder eines von mehreren Codierungsverfahren automatisch ausgewählt oder eingestellt und/oder eine von mehreren Übertragungsstrecken ausgewählt wird.

15. Verfahren nach einem der Ansprüche 1 bis 14, wobei
in einem ersten Schritt die Zeitstempel der zu Verfügung stehenden Zusatzsignale zu einem Abspielgerät übertragen werden und dadurch die zur Verfügung stehenden Bufferzeit ausgerechnet wird und
in einem zweiten Schritt das Zusatzsignal von einem Zusatzsignalserver zu einem Abspielgerät übertragen wird, wobei die Qualität des Zusatzsignals abhängig von der Bufferzeit und der zur Verfügung stehenden Bitrate ist, wobei vorzugsweise
das Zusatzsignal von dem Zusatzsignalserver zu dem Abspielgerät in Chunks mit zeitlichen Längen von maximal 10 Frames, das in etwa 400 ms entspricht, insbesondere maximal 5 Frames, das in etwa 200 ms entspricht, und vorzugsweise maximal 1 Frame, das in etwa 40 ms entspricht, übertragen werden und am Abspielgerät das Zusatzsignal mit einem lokalen Webserver empfangen wird.

## Claims

1. A method for synchronizing an additional signal with a primary signal which is transmitted to multiple playback units by a broadcast method, comprising the steps of:
- generating DB feature sequences for a database from the primary signal while the primary signal is transferred from a transmitting station to a playback unit,
- generating synchronization information about the primary signal in a synchronization server in that at least one signal feature sequence of the primary signal is extracted and compared with DB feature sequences stored in the database, wherein both the signal feature sequence and the DB feature sequence comprise features in the frequency space and wherein, in case of a match of the signal feature sequence with one of the DB feature sequences to a predetermined degree, synchronization information of the matching DB feature sequence is assigned to the primary signal at a position predefined by the signal feature sequence,
wherein a sound track of the primary signal is transformed in sections into the frequency space by a fast Fourier transform,
wherein the sections of the sound track that are transformed into the frequency space are not longer than 50 ms,
wherein the features are frequency peaks, which are above a certain threshold value,
- transferring the synchronization information to one of the playback units, which delivers an additional signal synchronously to the primary signal on the basis of the synchronization information.

2. The method of claim 1,
**characterized in that**
the point in time of the signal feature sequence is determined in the primary signal, which matches the DB feature sequence, and this point in time is used as extraction moment for generating the synchronization information, or
a time information is assigned to the DB feature sequence, which defines a certain DB point in time relative to the DB feature sequence, which is used for generating the synchronization information.

3. The method of claim 1 or 2,
**characterized in that**
synchronization information is assigned to the additional signal **in that** a signal feature sequence of the additional signal is extracted and compared with DB feature sequences stored in a database, wherein, in case of a match of the signal feature sequence with one of the DB feature sequences to a predetermined degree, synchronization information is assigned to the additional signal at a position predefined by the signal feature sequence, or synchronization information is manually assigned to the additional signal, or
an additional signal is used to which synchronization information is already associated beforehand.

4. The method according to any of claims 1 to 3,
**characterized in that**
the synchronization information comprises one or more of the following data:
- a time information, which describes a point in time of the primary and/or additional signal relative to a detected signal feature sequence,
- one or more identification markers, which describe the content of the primary and/or additional signal,
- a time stamp, which describes a certain point in time in the primary and/or additional signal,
- a temporal offset, which describes the required time interval for forwarding a primary and/or additional signal from a specific location on a transfer path to the actual delivery of the primary and/or additional signal at the playback unit.

5. The method according to any of claims 1 to 4,
**characterized in that**
the synchronization information is generated at a synchronization server, which is configured independently of a playback unit.

6. The method according to any of claims 1 to 5,
**characterized in that**
the additional signal is synchronized with the primary signal at the playback unit **in that**
- the primary signal and the additional signal are delivered at the playback unit, each of which includes one or more time markers as synchronization information, on the basis of which the playback unit synchronously assigns the additional signal to the primary signal, or
- on the basis of a playback time measured by means of a clock at the playback unit, to which the additional signal is assigned by means of the synchronization information in such a way that the additional signal is delivered synchronously with the primary signal.

7. The method according to any of claims 1 to 6,
**characterized in that**
if several signal feature sequences match with corresponding DB feature sequences to a predetermined degree, the several signal feature sequences are evaluated according to predetermined rules, and that the signal feature sequence having the best evaluation is selected for assigning the synchronization information to the primary signal at a position predefined by the signal feature sequence.

8. The method of claim 7,
**characterized in that**
the predetermined rules comprise one or more of the following rules:
- the higher the number of matching features of a feature sequence, the better the evaluation;
- the higher the number of matching features of a feature sequence in relation to the number of features comprised in the feature sequence, the better the evaluation;
- the concordance of the different features is classified, and the smaller the distance of the concordant features, the better is the classification of the corresponding concordance, this classification being taken into account in the overall evaluation of the concordance of a feature sequence.

9. The method according to any of claims 1 to 8,
**characterized in that**
for the calibration of a transfer route from a server to a playback unit and/or of the latency at a playback unit for the delivery of a media signal at the playback unit, a reference signal is delivered,
which is simultaneously picked up by a corresponding sensor, wherein the delivered reference signal and the received reference signal are compared with each other to determine a time interval required for forwarding the reference signal and the actual delivery at the playback unit, and
this time interval is used as a temporal offset to determine a delivery time with which a signal is delivered at the media playback unit.

10. The method of claim 9,
**characterized in that**
the reference signal comprises an audio signal and the sensor is a microphone and/or the reference signal comprises a video signal and the sensor is a camera.

11. The method of claim 9 or 10,
**characterized in that**
the time interval is determined **in that** the point in time of sending and the point in time of receiving the reference signal are determined, wherein the time interval is derived from the time difference of these two points in time, and the measurement of at least one of the two points in time is performed by a comparison of an extracted reference signal feature sequence with one or more previously stored reference signal feature sequences.

12. The method according to any of claims 1 to 11, wherein
the additional signal is transmitted to the playback unit from a synchronization server, which is configured independently of a playback unit, and the synchronization server generates synchronization information which relates to a server time of the synchronization server, which server time is measured at the synchronization server with a clock arranged there, wherein a playback unit clock, which is synchronized at least once with the server time and is used for measuring the playback time, is provided at the playback unit, and
a time drift of the playback time with respect to the server time is measured and this time drift is also taken into account when synchronizing the additional signal with the primary signal.

13. The method of claim 12,
**characterized in that**
the time drift is determined by multiple transfer of a time signal of the server time to the playback unit or of the playback time to the synchronization server and comparison of the transferred time signal with the locally present time signal in order to calculate a respective time difference, wherein the time drift is determined on the basis of the deviations of the time differences.

14. The method for synchronizing an additional signal with a primary signal according to any of claims 1 to 13, wherein
on the basis of the synchronization information, it is determined how much time is available for transmitting the additional signal from a predetermined server to a playback unit, and, on the basis of this time, either one of several coding methods is selected or set automatically and/or one of several transfer routes is selected.

15. The method according to any of claims 1 to 14, wherein
in a first step, the time stamps of the available additional signals are transferred to a playback unit and, in this way, the available buffer time is calculated, and
in a second step, the additional signal is transferred from an additional signal server to a playback unit, wherein the quality of the additional signal depends on the buffer time and the available bit rate, wherein preferably
the additional signal is transferred from the additional signal server to the playback unit in fragments having time lengths of at most 10 frames, which corresponds approximately to 400 ms, in particular at most 5 frames, which corresponds approximately to 200 ms, and preferably at most 1 frame, which corresponds approximately to 40 ms, and the additional signal is received at the playback unit with a local web server.

## Revendications

1. Procédé de synchronisation d'un signal supplémentaire avec un signal principal qui est transmis à de multiples appareils de lecture par un procédé de diffusion, comprenant les étapes :
- génération de séquences de caractéristiques BD pour une base de données à partir du signal principal pendant que le signal principal est transféré depuis une station d'émission à un appareil de lecture,
- génération d'informations de synchronisation relatives au signal principal dans un serveur de synchronisation en ce qu'au moins une séquence de caractéristiques de signal du signal principal est extraite et comparée avec des séquences de caractéristiques BD mémorisées dans la base de données, sachant que la séquence de caractéristiques de signal tout comme la séquence de caractéristiques BD comprennent des caractéristiques dans l'espace fréquentiel et, en cas de concordance de la séquence de caractéristiques de signal avec une des séquences de caractéristiques BD à un degré prédéterminé, des informations de synchronisation de la séquence de caractéristiques BD concordante sont associées au signal principal à une position prédéfinie par la séquence de caractéristiques de signal,
sachant qu'une piste de son du signal principal est transformée par sections en l'espace fréquentiel par une transformée de Fourier rapide,
sachant que les sections de la piste de son qui sont transformées en l'espace fréquentiel ne sont pas plus longues que 50 ms,
sachant que les caractéristiques sont des pics de fréquence, lesquels sont situés au-dessus d'une valeur seuil déterminée,
- transfert des informations de synchronisation à un des appareils de lecture qui délivre un signal supplémentaire de manière synchrone par rapport au signal principal sur la base des informations de synchronisation.

2. Procédé selon la revendication 1,
**caractérisé en ce que**
le moment de la séquence de caractéristiques de signal est déterminé dans le signal principal, laquelle concorde avec la séquence de caractéristiques BD, et ce moment est utilisé comme moment d'extraction pour la génération des informations de synchronisation, ou
une information de temps est associée à la séquence de caractéristiques BD, laquelle définit un moment BD déterminé par rapport à la séquence de caractéristiques BD, qui est utilisé pour la génération des informations de synchronisation.

3. Procédé selon la revendication 1 ou 2,
**caractérisé en ce que**
des informations de synchronisation sont associées au signal supplémentaire **en ce qu'**une séquence de caractéristiques de signal du signal supplémentaire est extraite et comparée avec des séquences de caractéristiques BD mémorisées dans une base de données, sachant qu'en cas de concordance à un degré prédéterminé de la séquence de caractéristiques de signal avec une des séquences de caractéristiques BD, des informations de synchronisation sont associées au signal supplémentaire à une position prédéfinie par la séquence de caractéristiques de signal, ou
des informations de synchronisation sont associées manuellement au signal supplémentaire, ou
un signal supplémentaire auquel des informations de synchronisation sont déjà associées préalablement est utilisé.

4. Procédé selon l'une des revendications 1 à 3,
**caractérisé en ce que**
les informations de synchronisation comprennent une ou plusieurs des données suivantes :
- une information de temps, lequel décrit un moment du signal principal et/ou supplémentaire par rapport à une séquence de caractéristiques de signal détectée,
- un ou plusieurs marqueurs d'identification, lesquels décrivent le contenu du signal principal et/ou supplémentaire,
- un horodatage, lequel décrit un moment déterminé dans le signal principal et/ou supplémentaire,
- un décalage temporel qui décrit l'intervalle de temps nécessaire pour transférer un signal principal et/ou supplémentaire depuis un endroit déterminé d'un chemin de transfert jusqu'à la délivrance effective du signal principal et/ou supplémentaire au niveau de l'appareil de lecture.

5. Procédé selon l'une des revendications 1 à 4,
**caractérisé en ce que**
les informations de synchronisation sont générées au niveau d'un serveur de synchronisation, lequel est constitué indépendamment d'un appareil de lecture.

6. Procédé selon l'une des revendications 1 à 5,
**caractérisé en ce que**
le signal supplémentaire est synchronisé par rapport au signal principal au niveau de l'appareil de lecture **en ce que**
- le signal principal et le signal supplémentaire sont délivrés au niveau de l'appareil de lecture, lesquels contiennent respectivement comme informations de synchronisation un ou plusieurs marqueurs temporels, sur la base desquels l'appareil de lecture associe le signal supplémentaire au signal principal de manière synchrone, ou
- sur la base d'un temps de lecture mesuré moyennant une horloge au niveau de l'appareil de lecture, auquel le signal supplémentaire est associé moyennant les informations de synchronisation de telle manière que le signal supplémentaire soit délivré de manière synchrone par rapport au signal principal.

7. Procédé selon l'une des revendications 1 à 6,
**caractérisé en ce que**
lorsque plusieurs séquences de caractéristiques de signal concordent à un degré prédéterminé avec des séquences de caractéristiques BD correspondantes, les plusieurs séquences de caractéristiques de signal sont évaluées selon des règles prédéterminées, et **en ce que** la séquence de caractéristiques de signal qui présente la meilleure évaluation est sélectionnée pour associer les informations de synchronisation au signal principal à une position prédéfinie par la séquence de caractéristiques de signal.

8. Procédé selon la revendication 7,
**caractérisé en ce que**
les règles prédéterminées comprennent une ou plusieurs des règles suivantes :
- plus le nombre de caractéristiques concordantes d'une séquence de caractéristiques est élevé, meilleure est l'évaluation ;
- plus le nombre des caractéristiques concordantes d'une séquence de caractéristiques est élevé par rapport au nombre de caractéristiques contenues dans la séquence de caractéristiques, meilleure est l'évaluation ;
- la concordance des différentes caractéristiques est classifiée, sachant que plus l'écart des caractéristiques concordantes est faible, mieux la concordance correspondante est classifiée et cette classification est prise en compte dans l'évaluation globale de la concordance d'une séquence de caractéristiques.

9. Procédé selon l'une des revendications 1 à 8,
**caractérisé en ce que**
pour le calibrage d'un trajet de transfert depuis un serveur à un appareil de lecture et/ou de la latence au niveau d'un appareil de lecture pour la délivrance d'un signal de médias sur l'appareil de lecture, un signal de référence est délivré,
lequel est capté simultanément par un capteur correspondant, sachant que le signal de référence délivré et le signal de référence reçu sont comparés l'un avec l'autre pour déterminer un intervalle de temps nécessaire pour transmettre le signal de référence et la délivrance effective au niveau de l'appareil de lecture, et
cet intervalle de temps est utilisé comme décalage temporel pour déterminer un temps de délivrance avec lequel un signal est délivré au niveau de l'appareil de lecture de médias.

10. Procédé selon la revendication 9,
**caractérisé en ce que**
le signal de référence comprend un signal audio et le capteur est un microphone et/ou le signal de référence comprend un signal vidéo et le capteur est une caméra.

11. Procédé selon la revendication 9 ou 10,
**caractérisé en ce que**
l'intervalle de temps est déterminé **en ce que** le moment de l'émission et le moment de la réception du signal de référence sont déterminés, sachant que l'intervalle de temps est déduit de la différence de temps de ces deux moments, et la mesure d'au moins un des deux moments est exécutée par une comparaison d'une séquence de caractéristiques de signal de référence extraite avec une ou plusieurs séquences de caractéristiques de signal de référence mémorisées préalablement.

12. Procédé selon l'une des revendications 1 à 11, sachant que
le signal supplémentaire est transmis à l'appareil de lecture depuis un serveur de synchronisation constitué indépendamment d'un appareil de lecture et des informations de synchronisation sont générées au niveau du serveur de synchronisation, lesquelles se rapportent à un temps de serveur du serveur de synchronisation qui est mesuré au niveau du serveur de synchronisation avec une horloge qui y est disposée, sachant qu'une horloge d'appareil de lecture, laquelle est synchronisée au moins une fois avec le temps de serveur, est prévue au niveau de l'appareil de lecture pour la mesure du temps de lecture, et
une dérive temporelle du temps de lecture par rapport au temps de serveur est mesurée et cette dérive temporelle est également prise en compte lors de la synchronisation du signal supplémentaire par rapport au signal principal.

13. Procédé selon la revendication 12,
**caractérisé en ce que**
la dérive temporelle est déterminée par transfert multiple d'un signal de temps du temps de serveur à l'appareil de lecture ou du temps de lecture au serveur de synchronisation et comparaison du signal de temps transféré avec le signal de temps présent sur place pour calculer respectivement une différence de temps, sachant que la dérive temporelle est déterminée sur la base des écarts des différences de temps.

14. Procédé de synchronisation d'un signal supplémentaire par rapport à un signal principal selon l'une des revendications 1 à 13, sachant que
il est déterminé, sur la base des informations de synchronisation, combien de temps est disponible pour la transmission du signal supplémentaire depuis un serveur prédéterminé à un appareil de lecture, et sur la base de ce temps, soit un de plusieurs procédés de codage est sélectionné ou réglé automatiquement et/ou un de plusieurs trajets de transmission est sélectionné.

15. Procédé selon l'une des revendications 1 à 14, sachant que
à une première étape, les horodatages des signaux supplémentaires disponibles sont transférés à un appareil de lecture et, de la sorte, le temps tampon disponible est calculé et
à une deuxième étape, le signal supplémentaire est transféré depuis un serveur de signal supplémentaire à un appareil de lecture, sachant que la qualité du signal supplémentaire dépend du temps tampon et des débits binaires disponibles, sachant que de préférence
le signal supplémentaire est transféré depuis le serveur de signal supplémentaire à l'appareil de lecture par fragments ayant des longueurs temporelles de maximum 10 trames, ce qui correspond approximativement à 400 ms, en particulier de maximum 5 trames, ce qui correspond approximativement à 200 ms, et de préférence de maximum 1 trame, ce qui correspond approximativement à 40 ms, et le signal supplémentaire est reçu au niveau de l'appareil de lecture avec un serveur Web local.
